(19) Europäisches Patentamt
European Patent Office
Office européen des brevets

(11) **EP 2 635 034 B1**

(12) **EUROPEAN PATENT SPECIFICATION**

(45) Date of publication and mention
of the grant of the patent:
**24.09.2014 Bulletin 2014/39**

(51) Int Cl.:
***H04N 13/02*** (2006.01)    ***G06T 7/20*** (2006.01)

(21) Application number: **11835831.6**

(22) Date of filing: **26.10.2011**

(86) International application number:
**PCT/JP2011/005956**

(87) International publication number:
**WO 2012/056686 (03.05.2012 Gazette 2012/18)**

(54) **3D IMAGE INTERPOLATION DEVICE, 3D IMAGING DEVICE, AND 3D IMAGE INTERPOLATION METHOD**

3D-BILDINTERPOLATIONSVORRICHTUNG, 3D-BILDGEBUNGSVORRICHTUNG UND 3D-INTERPOLATIONSVERFAHREN

DISPOSITIF D'INTERPOLATION D'IMAGE 3D, DISPOSITIF D'IMAGERIE 3D, ET PROCÉDÉ D'INTERPOLATION D'IMAGE 3D

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.10.2010 JP 2010240461**

(43) Date of publication of application:
**04.09.2013 Bulletin 2013/36**

(73) Proprietor: **Dolby International AB
1101 CN Amsterdam Zuid-Oost (NL)**

(72) Inventor: **ISHII, Yasunori
Osaka-shi, Osaka 540-6207 (JP)**

(74) Representative: **Vigand, Philippe et al
Novagraaf International SA
Chemin de l'Echo 3
1213 Onex (CH)**

(56) References cited:
**JP-A- 2004 229 093    JP-A- 2004 229 093
JP-A- 2009 244 490    JP-A- 2010 011 066
JP-A- 2010 081 357    JP-A- 2010 171 672**

**Description**

**[Technical Field]**

The present invention relates to three-dimensional (3D) image interpolation devices, 3D imaging apparatuses, and 3D image interpolation methods for performing frame interpolation on 3D video.

**[Background Art]**

In recent years, digital still cameras and digital camcorders using a solid-state imaging device (hereinafter, referred to also simply as an "imaging device") such as a Charge Coupled Device (CCD) image sensor and a Complementary Metal Oxide Semiconductor (CMOS) image sensor have achieved remarkably higher functions and higher performance. In particular, with the advance of the semiconductor manufacturing technologies, pixel structures in such solid-state imaging devices have been further miniaturized.

As a result, higher integration of pixels and driving circuits in the solid-state imaging devices have been considered. Therefore, in a few years, the number of pixels in an imaging device has immensely been increased from about million pixels to ten million pixels or more. Furthermore, quality of images captured by imaging has also dramatically been improved.

In the meanwhile, flat-screen display apparatuses such as Liquid Crystal Displays (LCDs) and plasma displays can save space and display high-definition and high-contrast images. Such movement of improving image quality is expanding from two-dimensional (2D) images to 3D images. Recently, 3D display apparatuses, which can display high-quality 3D images by using polarization eyeglasses or eyeglasses with high-speed shutter, have been developed.

3D imaging apparatuses for generating high-quality 3D images or high-quality 3D video to be displayed by 3D display apparatuses have also been developed. For a simple method of generating 3D images and displaying them by a 3D display apparatus, it is considered that an image or video is captured by an imaging apparatus having two optical systems (two sets of a lens and an imaging device) located at two different positions. Images captured by the respective optical systems are provided as a left-eye image and a right-eye image to a 3D display apparatus. The 3D display apparatus displays the captured left-eye image and right-eye image by switching them at a high speed, so that a user wearing eyeglasses can perceive the images as a 3D image.

There is another method for generating a left-eye image and a right-eye image, by calculating depth information of a scene by an imaging system including a plurality of cameras, and using the depth information and texture information for the left-eye/right-eye image generation. There is still another method for generating a left-eye image and a right-eye image, by which depth information is calculated from a plurality of images captured by a single camera by varying geometric or optical conditions of a scene (such as a way of light exposure) or conditions of an optical system in an imaging apparatus (such as a diaphragm size).

One example of the above-described method using a plurality of cameras is a multi-baseline stereo method disclosed in Non-Patent Literature 1 by which a depth of each pixel is calculated by simultaneously using images captured by a plurality of cameras. It is known that this multi-baseline stereo method can estimate a scene depth with a higher accuracy than that of a general twin-lens stereo.

The following describes one example of the multi-baseline stereo method in the case where a left-eye image and a right-eye image (parallax images) are generated by using two cameras (a twin-lens stereo). A twin-lens stereo captures two images of a subject from different viewpoints by using two cameras, and extracts feature points from the respective captured images to determine a correspondence relationship between the feature points to find corresponding points. A distance between the found corresponding points is called a parallax. For example, regarding two images captured by the two cameras, if coordinates (x, y) of the corresponding feature points are (5, 10) and (10, 10), respectively, a parallax is 5. Here, assuming that the cameras are arranged in parallel to each other, and "d" represents a parallax, "f" represents a focal distance between the two cameras, and "B" represents a distance (baseline) between the cameras, a distance from the cameras to the subject is calculated by following Equation 1.

**[Math. 1]**

$$Z = \frac{-Bf}{d} \qquad \text{(Equation 1)}$$

If the distance between the two cameras is far, a feature point observed by one of the cameras may not be observed by the other camera. Even in such a case, the multi-baseline stereo method can use three or more cameras to reduce ambiguity in the corresponding point search, thereby reducing errors in parallax estimation.

If a depth is determined, it is possible to generate a left-eye image and a right-eye image by using the depth information and a scene texture as disclosed in Non-Patent Literature 2, for example. According to the method disclosed in Non-Patent Literature 2, based on the estimated depth and the scene texture obtained by the imaging apparatus, it is possible to generate images which are vertically captured from vertical camera positions (a vertical left-eye camera position and a vertical right-eye camera position) as new viewpoints. Thereby, it is possible to generate images having viewpoints different from those in actual capturing.

The images having the new viewpoints can be generated by following Equations 2. Here, the respective symbols are the same as those in Equation 1. "xc" represents x-coordinates of a camera for which a depth is calculated, and "xl" and "xr" represent x-coordinates of respective cameras at the newly-generated viewpoints. "xl" is x-coordinates of a (virtual) left-eye camera, and "xr" is x-coordinates of a (virtual) right-eye camera. "tx" represents a distance (baseline) between the virtual cameras.

[Math. 2]

$$xl = xc + \frac{txf}{2Z}$$

$$xr = xc - \frac{txf}{2Z} \qquad (\text{Equations 2})$$

As described above, if a depth is calculated by using a plurality of cameras, it is possible to generate a left-eye image and a right-eye image.

On the other hand, one example of the method in which conditions regarding a scene are varied to calculate a depth is the photometric stereo method disclosed in Non-Patent Literature 3. When a plurality of images generated by capturing a subject by varying positions of illumination are inputted, a 3D position of the subject is determined based on a 3D relationship between pixel values of the subject and the illumination positions. Furthermore, an example of the method of varying optical conditions of an imaging apparatus is the depth-from-defocus method disclosed in Non-Patent Literature 4. By this method, a distance (depth) from a camera to a subject can be calculated by using (a) a change amount in blur in each pixel in a plurality of images captured by varying a focal distance of the camera, (b) a focal distance of the camera, and (c) a diaphragm size (opening size) of the camera. As described above, various methods for determining scene depth information have been researched. In particular, the depth-from-defocus method has advantages of reducing a size and a weight of an imaging apparatus and not requiring other apparatuses such as an illumination apparatus.

**[Citation List]**

**[Patent Literatures]**

[PTL 1] Japanese Unexamined Patent Application Publication No. 7-262382
[PTL 2] Japanese Unexamined Patent Application Publication No. 2010-16743

**[Non Patent Literature]**

[NPTL 1] "A Multiple-baseline Stereo", IEEE Trans. Pattern Analysis and Machine Intelligence, Vol.15, No.4, pp.353-363, 1993, M. Okutomi and T. Kanade
[NPTL 2] "Stereoscopic Image Generation Based on Depth Images for 3D TV", IEEE Trans. On Broadcasting, Vol.51, No.2, June 2005, L. Zhang and W. J. Tam
[NPTL 3] "Photometric method for determining surface orientation from multiple images", Optical Engineerings 19, I, 139-144, 1980, R. J. Woodham
[NPTL 4] "A new sense for depth of field", IEEE Transaction on Pattern Analysis and Machine Intelligence, 2, 4, pp.523-531 1987, A. P. Pentland

[NPTL 5] "Depth from Defocus: A Spatial Domain Approach", International Journal of Computer Vision, Vol.13, No.3, pp.271-294, 1994 M. Subbarao and G. Surya.
[NPTL 6] "3DC Safety Guidelines", 3D Consortium, April 20, 2010, revised edition

[Summary of Invention]

[Technical Problem]

As described above, by using the depth-from-defocus method, it is possible to determine scene depth information by a small single-lens system. However, the depth-from-defocus method requires capturing of two or more images by varying a camera focal distance. In other words, it is necessary, in capturing images, to drive a lens (or an imaging device) backwards and forwards to vary a focal distance of the camera. Therefore, a time required for a single capturing task heavily depends on a driving time and a time required to wait until the lens or imaging device stops vibrating after driving.

Therefore, the depth-from-defocus method is not capable of capturing many images in a second. If video is captured while calculating depth information by the depth-from-defocus method, a frame rate of the video is low.

In order to generate video with a high frame rate from video with a low frame rate, there is a method of performing interpolating using two images in a temporal direction to generate an image having a higher temporal resolution. This method is used, for example, to increase a temporal resolution for smooth display on a display apparatus.

However, if interpolation in a temporal direction is performed using images including blurs for the depth-from-defocus method, it is possible to generate an interpolated image including the blurs, but the blurs affect the depth information calculation. Therefore, the depth-from-defocus method cannot calculate depth information from the interpolated image including blurs.

In addition, in order to increase a temporal resolution of a 2D image, the following method is also considered. First, the depth-from-defocus method is used to generate a left-eye image and a right-eye image for each still image, and then image interpolation is performed for each viewpoint.

However, since the left-eye image and the right-eye image have been separately interpolated, it is not assured that the 3D geometric position relationship is correct. Therefore, there is no feeling of strangeness when the images are perceived as independent different still pictures, but there is a feeling of strangeness when the images are perceived as 3D video by a 3D display apparatus.

By the method disclosed in Patent Literature 1, a movement model of a subject is defined, and coordinate information and movement information are interpolated. By this method, it is possible to interpolate not only 2D coordinate information but also 3D movement information. However, since a general scene includes a complicated movement which is difficult to be modeled, it is difficult to apply this method to general scenes.

Thus, in order to overcome the above-described problems of the conventional techniques, one non-limiting and exemplary embodiment provides a 3D image interpolation device, a 3D imaging apparatus, and a 3D image interpolation method which are capable of performing frame interpolation on 3D video with a high accuracy.

[Solution to Problem]

In one general aspect, the techniques disclosed here feature; a three-dimensional (3D) image interpolation device that performs frame interpolation on 3D video, the 3D image interpolation device including: a range image interpolation unit configured to generate at least one interpolation range image to be interpolated between a first range image and a second range image, the first range image indicating a depth of a first image included in the 3D video, and the second range image indicating a depth of a second image included in the 3D video; an image interpolation unit configured to generate at least one interpolation image to be interpolated between the first image and the second image; and an interpolation parallax image generation unit configured to generate, based on the at least one interpolation image, at least one pair of interpolation parallax images having parallax according to a depth indicated by the at least one interpolation range image.

With the above structure, the interpolation parallax images are generated after separately performing interpolation for 2D images and interpolation for range images when frame interpolation is performed on 3D video. Therefore, it is possible to suppress more interpolation errors in a depth direction in comparison to the case where interpolation parallax images are generated by separately performing interpolation for left-eye images and interpolation for right-eye images. As a result, the frame interpolation on 3D video can be performed with a high accuracy. In addition, a left-eye interpolation image and a right-eye interpolation image are generated by using the same interpolation range image and the same interpolation image. Therefore, the 3D video for which the frame interpolation has been performed hardly cause the user viewing the 3D video to feel uncomfortable due to the interpolation.

It is possible that the 3D image interpolation device further includes: a range motion vector calculation unit configured to calculate, as a range motion vector, a motion vector between the first range image and the second range image; an image motion vector calculation unit configured to calculate, as an image motion vector, a motion vector between the first image and the second image; a vector similarity calculation unit configured to calculate a vector similarity that is a value indicating a degree of a similarity between the image motion vector and the range motion vector; and an interpolation image number determination unit configured to determine an upper limit of the number of interpolations, so that the number of the interpolations increases as the vector similarity calculated by the vector similarity calculation unit increases, wherein the interpolation parallax image generation unit is configured to generate the at least one pair of interpolation parallax images which is equal to or less than the upper limit determined by the interpolation image number determination unit.

With the above structure, it is possible to determine the upper limit of interpolations depending on a similarity between a range motion vector and an image motion vector. When the similarity between the range motion vector and the image motion vector is low, there is a high possibility that the range motion vector or the image motion vector is not correctly calculated. Therefore, in such a case, the interpolation upper limit is set to be low so as to prevent that interpolation parallax images deteriorates image quality of the 3D video.

It is also possible that the range motion vector calculation unit is configured to calculate the range motion vector for each block having a first size, the image motion vector calculation unit is configured to calculate the image motion vector for each block having the first size, and the vector similarity calculation unit is configured to: (i) generate at least one of a histogram of directions of range motion vectors including the range motion vector and a histogram of powers of the range motion vectors, for each block having a second size greater than the first size; (ii) generate at least one of a histogram of directions of image motion vectors including the image motion vector and a histogram of powers of the image motion vectors, for each block having the second size; and (iii) calculate the vector similarity based on at least one of (a) a similarity between the histogram of the directions of the range motion vectors and the histogram of the directions of the image motion vectors and (b) a similarity between the histogram of the powers of the range motion vectors and the histogram of the powers of the image motion vectors.

With the above structure, it is possible to calculate a vector similarity based on at least one of a histogram of motion vector directions and a histogram of motion vector powers. It is thereby possible to improve a correlation between a possibility of incorrect calculation of motion vectors and a vector similarity. As a result, the interpolation upper limit can be determined appropriately.

It is further possible that the interpolation image number determination unit is configured to determine, as the number of the interpolations, a number which is inputted by a user and is equal to or less than the upper limit, and the interpolation parallax image generation unit is configured to generate the at least one pair of interpolation parallax images which is equal to the number of the interpolations determined by the interpolation image number determination unit.

With the above structure, the number of interpolations can be determined based on an input from the user. As a result, it is possible to prevent the frame interpolation from causing the user to feel uncomfortable.

It is still further possible that the 3D image interpolation device further includes a range image obtainment unit configured to: (i) obtain the first range image based on a blur correlation between a plurality of captured images which are included in a first captured image group and have respective different focal distances; and (ii) obtain the second range image based on a blur correlation between a plurality of captured images which are included in a second captured image group and have respective different focal distances, the second captured image group being temporally subsequent to the first captured image group.

With the above structure, a plurality of captured images having respective different focal distances can be used as inputs. Therefore, it is possible to contribute to the decrease of an imaging apparatus size.

It is still further possible that the 3D image interpolation device further includes a texture image obtainment unit configured to: (i) obtain, as the first image, a first texture image by reconstructing one captured image included in the first captured image group based on blur information indicating a feature of blur in the one captured image; and (ii) obtain, as the second image, a second texture image by reconstructing one captured image included in the second captured image group based on blur information indicating a feature of blur in the one captured image.

With the above structure, it is possible to generate interpolation parallax images based on a texture image.

It is still further possible that the 3D image interpolation device is implemented as an integrated circuit.

It is still further possible that a 3D imaging apparatus, including: an imaging unit; and the above-described 3D image interpolation device.

With the above structure, the 3D imaging apparatus can offer the same advantages as those of the above-described 3D image interpolation device.

It should be noted that the present disclosure can be implemented not only as the 3D image interpolation device including the above characteristic units, but also as a 3D image interpolation method including steps performed by the characteristic units of the 3D image interpolation device. The present disclosure may be implemented also as a program causing a computer to execute the characteristic steps of the 3D image interpolation method. Of course, the program can be distributed via a non-transitory recording medium such as a Compact Disc-Read Only Memory (CD-ROM) or via a transmission medium such as the Internet.

**[Advantageous Effects of Invention]**

The present disclosure is capable of performing frame interpolation on 3D video with a high accuracy.

**[Brief Description of Drawings]**

[FIG. 1] FIG. 1 is a block diagram showing an overall structure of a 3D imaging apparatus according to an embodiment of the present disclosure.
[FIG. 2] FIG. 2 is a block diagram showing a structure of a 3D image interpolation unit apparatus according to the embodiment of the present disclosure.
[FIG. 3] FIG. 3 is a flowchart of processing performed by the 3D image interpolation unit according to the embodiment of the present disclosure.
[FIG. 4] FIG. 4 is a flowchart of processing performed by a range image obtainment unit according to the embodiment of the present disclosure.
[FIG. 5] FIG. 5 is a diagram for explaining an example of a motion vector calculation method according to the embodiment of the present disclosure.
[FIG. 6] FIG. 6 is a diagram showing a relationship among a blurred image, an omnifocal image, and PSF.
[FIG. 7] FIG. 7 is a diagram showing how to determine a size of a blur kernel according to the embodiment of the present disclosure.
[FIG. 8] FIG. 8 is a flowchart of processing performed by a vector similarity calculation unit according to the embodiment of the present disclosure.
[FIG. 9] FIG. 9 is a diagram showing one example of a method of inputting the number of interpolations according to the embodiment of the present disclosure.
[FIG. 10] FIG. 10 is a diagram for explaining a method of generating interpolation range images and interpolation texture images according to the embodiment of the present disclosure.
[FIG. 11] FIG. 11 is a diagram for explaining a method of generating parallax images according to the embodiment of the present disclosure.
[FIG. 12] FIG. 12 is a block diagram showing a functional structure of a 3D image interpolation device according to another embodiment of the present disclosure.
[FIG. 13] FIG. 13 is a flowchart of processing performed by the 3D image interpolation unit according to the other embodiment of the present disclosure.

**[Description of Embodiments]**

The following describes embodiments according to the present disclosure with reference to the drawings. It should be noted that all the embodiments described below are specific examples of the present disclosure. Numerical values, shapes, materials, constituent elements, arrangement positions and the connection configuration of the constituent elements, steps, the order of the steps, and the like described in the following embodiments are merely examples, and are not intended to limit the present disclosure. The present disclosure is based on the appended claims. Therefore, among the constituent elements in the following embodiments, constituent elements that are not described in independent claims that show the most generic concept of the present disclosure are described as elements constituting more desirable configurations, although such constituent elements are not necessarily required to achieve the object of the present disclosure.
It should also be noted that hereinafter, an "image" refers to signals or information two-dimensionally expressing luminance or colors of a scene. Furthermore, a "range image" refers to signals or information two-dimensionally expressing a distance (depth) from a camera to the scene. Moreover, "parallax images" refer to a plurality of images (for example, a right-eye image and a left-eye image) corresponding to respective different viewpoints.

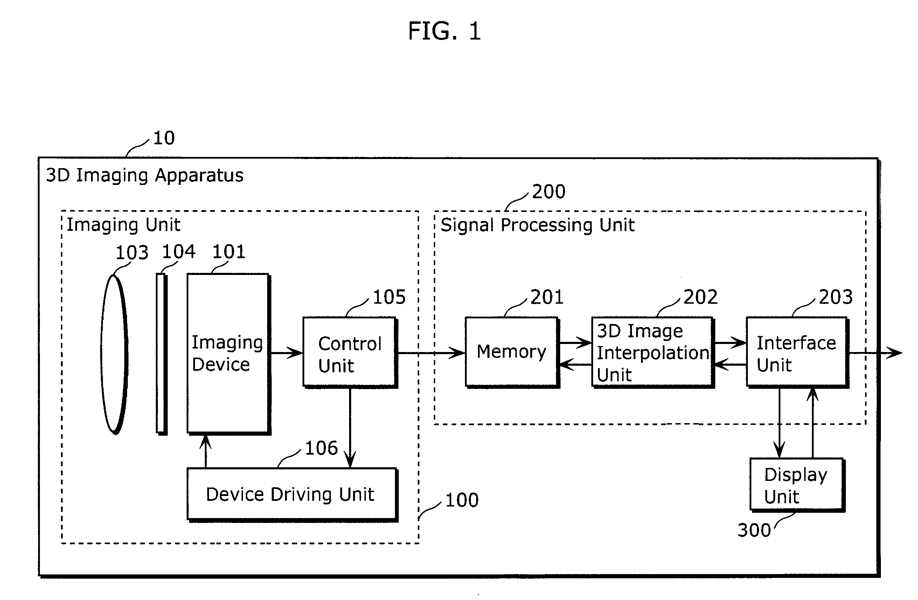

FIG. 1 is a block diagram showing an overall structure of a 3D imaging apparatus 10 according to an embodiment of the present disclosure. The 3D imaging apparatus 10 according to the present embodiment is a digital electron camera. The 3D imaging apparatus 10 includes an imaging unit 100, a signal processing unit 200, and a display unit 300. The following describes the imaging unit 100, the signal processing unit 200, and the display unit 300 in more detail.
The imaging unit 100 captures an image of a scene. A scene refers to everything seen in an image captured by the imaging unit 100. A scene includes a background in addition to a subject.
As shown in FIG. 1, the imaging unit 100 includes an imaging device 101, an optical lens 103, a filter 104, a control unit 105, and a device driving unit 106.

The imaging device 101 is a solid-state imaging device such as a CCD image sensor or a CMOS image sensor. The imaging device 101 is manufactured by a known semiconductor manufacturing technology. For example, the imaging device 101 includes a plurality of light-sensing cells arranged in rows and columns on an imaging plane.

The optical lens 103 generates an image on the imaging plane of the imaging device 101. Although the imaging unit 100 according to the present embodiment includes the single optical lens 103, but it may include a plurality of optical lenses.

The filter 104 is an infrared cut filter through which visible light can pass but near-infrared light (IR) cannot pass. It should be noted that the imaging unit 100 may not include the filter 104.

The control unit 105 generates basic singles for driving the imaging device 101. Furthermore, the control unit 105 receives output signals of the imaging device 101 and provides them to the signal processing unit 200.

Based on the basic signals generated by the control unit 105, the device driving unit 106 drives the imaging device 101. It should be noted that the control unit 105 and the device driving unit 106 are implemented as Large Scale Integrations (LSIs) such as CCD drivers.

The signal processing unit 200 generates image signals based on the signals issued from the imaging unit 100. As shown in FIG. 1, the signal processing unit 200 includes a memory 201, a 3D image interpolation unit 202, and an interface unit 203.

The 3D image interpolation unit 202 performs frame interpolation on 3D video. The 3D image interpolation unit 202 may be appropriately implemented as a combination of hardware such as a known digital signal processor (DSP) and software for executing image processing including image signal generation. The 3D image interpolation unit 202 will be described in more detail later with reference to corresponding figures.

The memory 201 is, for example, a Dynamic Random Access Memory (DRAM) or the like. On the memory 201, signals obtained from the imaging unit 100 are recorded, and furthermore, image data generated by the 3D image interpolation unit 202 or its compressed data is temporarily recorded. These pieces of image data are provide to a recording medium (not shown) or the display unit 300 via the interface unit 203.

The display unit 300 displays capturing conditions or captured images. Furthermore, the display unit 300 is, for example, a capacitance touch panel or a resistance film touch panel, and can serve also as a receiving unit that receives inputs from a user. Input information from the user is used in control of the signal processing unit 200 and the imaging unit 100 via the interface unit 203.

It should be noted that the 3D imaging apparatus 10 according to the present embodiment may further include known structural elements such as an electronic shutter, a view finder, a power source (battery), and a flash light, but these elements are not essential to understand the present disclosure so that they will not be described herein.

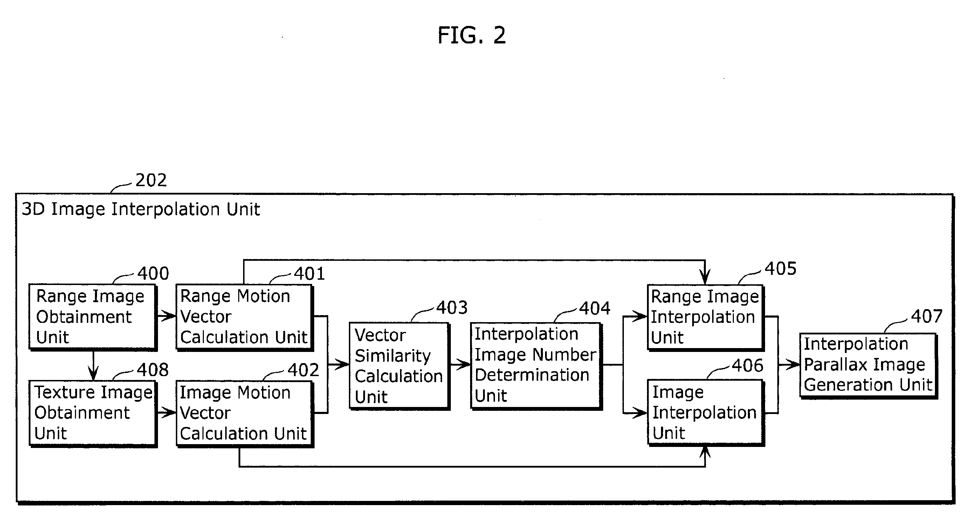

FIG. 2 is a block diagram showing an overall structure of the 3D imaging apparatus 202 according to the embodiment of the present disclosure. As shown in FIG. 2, the 3D image interpolation unit 202 includes a range image obtainment unit 400, a texture image obtainment unit 408, a range motion vector calculation unit 401, an range motion vector calculation unit 402, a vector similarity calculation unit 403, an interpolation image number determination unit 404, a range image interpolation unit 405, an image interpolation unit 406, and an interpolation parallax image generation unit 407.

The range image obtainment unit 400 obtains a first range image and a second range image. The first range image expresses a depth of a first image, and the second range image expresses a depth of a second image. The first and second images are included in 3D video and have the same viewpoint, so that they are used for frame interpolation.

According to the present embodiment, the range image obtainment unit 400 obtains the first range image based on a blur correlation among a plurality of captured images which are included in the first captured image group and have different focal distances. In addition, the range image obtainment unit 400 obtains the second range image based on a blur correlation among a plurality of captured images which are included in a second captured image group and have different focal distances.

Each of the first captured image group and the second captured image group includes a plurality of images captured by varying a focal distance by the imaging unit 100. The second captured image group is temporally subsequent to the first captured image group.

The texture image obtainment unit 408 obtains a first texture image as the first image, by reconstructing a single captured image included in the first captured image group by using blur information indicating a blur feature of the single captured image. In addition, the texture image obtainment unit 408 obtains a second texture image as the second image, by reconstructing a single captured image included in the second captured image group by using blur information indicating a blur feature of the single captured image.

According to the present embodiment, a texture image refers to an image that is generated by reconstructing a captured image using blur information indicating a blur feature in the captured image. In other words, a texture image is an image from which blur included in the captured image has been removed. Therefore, a texture image is an image in which all pixels come into the same focus.

It should be noted that it is not necessary to use the first texture image and the second texture image as the first image and the second image, respectively. In other words, the first and second images may include blur. In this case, the 3D image interpolation unit 202 may not include the texture image obtainment unit 408.

The range motion vector calculation unit 401 calculates a motion vector from the first range image and the second range image. Here, the motion vector calculated from the first range image and the second range image is referred to as a range motion vector.

The image motion vector calculation unit 402 calculates a motion vector from the first image and the second image. Here, the motion vector calculated from the first image and the second image is referred to as an image motion vector.

The vector similarity calculation unit 403 calculates a vector similarity that is a value indicating a degree of a similarity between the range motion vector and the image motion vector. The method of calculating the vector similarity will be described later in detail.

The interpolation image number determination unit 404 determines an upper limit of interpolations so that the number of interpolations increases as the calculated similarity increases.

The range image interpolation unit 405 generates at least one interpolation range image to be interpolated between the first range image and the second range image. More specifically, the range image interpolation unit 405 generates interpolation range images which are equal to or less than the interpolation upper limit determined by the interpolation image number determination unit 404.

The image interpolation unit 406 generates at least one interpolation image to be interpolated between the first image and the second image. According to the present embodiment, the image interpolation unit 406 generates at least one interpolation texture image to be interpolated between the first texture image and the second texture image.

More specifically, the image interpolation unit 406 generates interpolation images which are equal to or less than the interpolation upper limit determined by the interpolation image number determination unit 404.

The interpolation parallax image generation unit 407 generates, based on an interpolation image, at least one pair of interpolation parallax images having parallax according to a depth of an interpolation range image. According to the present embodiment, the interpolation parallax image generation unit 407 generates interpolation parallax image pairs which are equal to or less than the interpolation upper limit determined by the interpolation image number determination unit 404.

The 3D image interpolation unit 202 performs such frame interpolation on 3D video, by generating these interpolation parallax images as described above. The 3D video for which the frame interpolation has been performed is provided to, for example, a 3D display apparatus (not shown). The 3D display apparatus displays the 3D video, for example, by a 3D display method using eyeglasses. The eyeglasses 3D display method is a method of displaying a left-eye image and a right-eye image having parallax to a user wearing eyeglasses (for example, liquid crystal shutter eyeglasses or polarization eyeglasses).

It should be noted that the 3D display apparatus does not need to display parallax images always by the eyeglasses 3D display method, but may display them by a glasses-free 3D display method. An example of the glasses-free 3D display method is a 3D display method without using eyeglasses (for example, a parallax barrier method or a lenticular lens method).

The following describes processing performed by the 3D image interpolation unit 202 having the above-described structure.

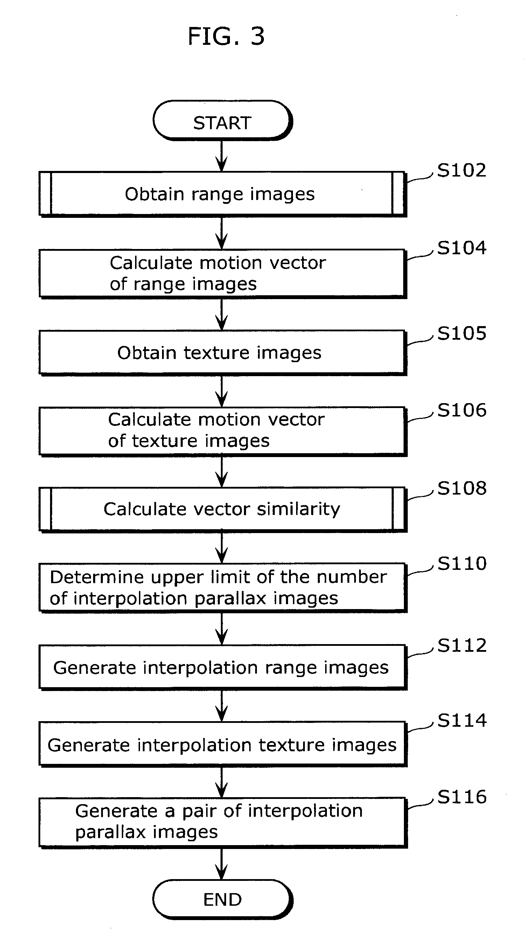

FIG. 3 is a flowchart of processing performed by the 3D image interpolation unit 202 according to the present embodiment of the present disclosure. It is assumed herein that the first image is the first texture image and the second image is the second texture image.

First, the range image obtainment unit 400 obtains the first range image and the second range image (S102). The range motion vector calculation unit 401 calculates a motion vector (range motion vector) from the first range image and the second range image (S104). The texture image obtainment unit 408 obtains the first texture image and the second texture image (S105). The range motion vector calculation unit 402 calculates a motion vector (image motion vector) from the first texture image and the second texture image (S106).

The vector similarity calculation unit 403 calculates a similarity between the range motion vector and the image motion vector (S108). The interpolation image number determination unit 404 determines an upper limit of interpolations so that the number of interpolations increases as the calculated similarity increases (110).

The range image interpolation unit 405 generates interpolation range images which are equal to or less than the interpolation upper limit, in order to be interpolated between the first range image and the second range image (S112). The image interpolation unit 406 generates interpolation texture images which are equal to or less than the interpolation upper limit, in order to be interpolated between the first texture image and the second texture image (S114).

The interpolation parallax image generation unit 407 generates, based on an interpolation texture image, a pair of interpolation parallax images having parallax according to a depth indicated by an interpolation range image corresponding to the interpolation texture image (S116).

The interpolation parallax images are generated as described above, and frame interpolation is performed on 3D video. It should be noted that the processing from Step S102 to Step S116 is repeated by switching a current image (the first texture image or the second texture image) to be interpolated.

Next, each of the steps shown in FIG. 3 is described in more detail.

<Range Image Obtainment (S102)>

First, the range image obtainment at Step S102 is described in more detail.

According to the present embodiment, the range image obtainment unit 400 obtains range images each indicating a distance from the camera to a scene (hereinafter, referred to also as a "subject distance" or simply as a "distance"), based on a plurality of images captured by the imaging unit 100. The following describes a method of measuring the distance for each pixel by the depth-from-defocus method disclosed in Patent Literature 2. It should be noted that the range image obtainment unit 400 may obtain range images by other methods (for example, the stereo method using a plurality of cameras, the photometric stereo method, or the TOF method using an active sensor).

In the depth-from-defocus method, first, the imaging unit 100 captures, as a single image group, a plurality of images having different blurs, by varying setting of the lens or diaphragm. The imaging unit 100 generates a plurality of such image groups by repeating the above-described capturing. Here, one image group among the plurality of image groups generated as described above is referred to as the first image group, and an image group temporally subsequent to the first image group is referred to as the second image group.

Here, as one example, the description is given for processing in which the range image obtainment unit 400 obtains a single range image from a single image group.

The range image obtainment unit 400 calculates, for each pixel, a correlation amount of blur among the captured images included in the first image group. The range image obtainment unit 400 obtains (selects) a range image from the first image group, by referring, for each pixel, to a reference table in which a relationship between a blur correlation amount and a subject distance is predetermined.

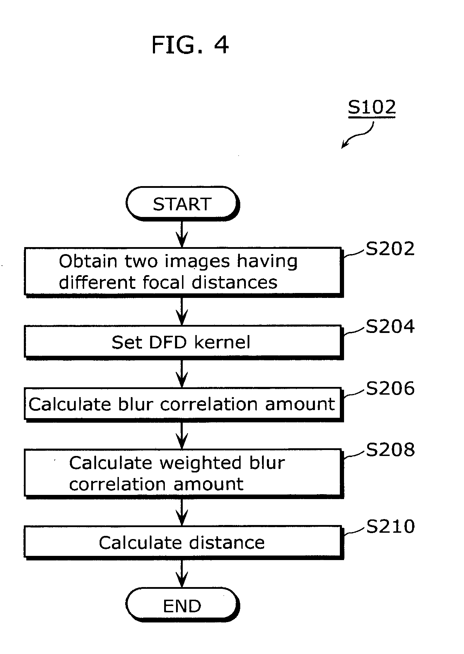

FIG. 4 is a flowchart of processing performed by the range image obtainment unit 400 according to the present embodiment of the present disclosure. More specifically, FIG. 4 shows a distance measurement method using the depth-from-defocus method.

First, the range image obtainment unit 400 obtains, from the imaging unit 100, two captured images showing the same scene but having different focal distances (S202). It is assumed that the two captured images are included in the first image group. The focal distance can be changed by moving a position of the lens or imaging device.

Next, for each of the two images, the range image obtainment unit 400 sets, as a DFD kernel, a region including (a) a current pixel for which a distance is to be measured and (b) pixel groups in a region around the pixel (S204). This DFD kernel is a target for which a subject distance to be measured. A size or a shape of the DFD kernel is not specifically limited. For example, it is possible to set, as the DFD kernel, a rectangular region of 10 pixels x 10 pixels around the current pixel to be measured.

Then, the range image obtainment unit 400 extracts the region set as the DFD kernel from each of the two images captured by varying a focal distance, and calculates a blur correlation amount for each pixel between the DFD kernels (S206).

Here, the range image obtainment unit 400 weights the blur correlation amount calculated for the respective pixels in the DFD kernel, by using a weighting coefficient predetermined for the DFD kernel (S208). For example, a greater value of the weighting coefficient is assigned to a location closer to the center of the DFD kernel, and a smaller value of the weighting coefficient is assigned to a location closer to an the end of the DFD kernel. It should be noted that a known weighting distribution such as gauss distribution may be used as the weighting coefficient. The weighting processing can provide robustness to noise influence. A sum of the weighted blur correlation amounts regarding the respective pixels is treated as a blur correlation amount of the DFD kernel (hereinafter, referred to as a "DFD kernel blur correlation amount").

Finally, the range image obtainment unit 400 calculates the subject distance, based on the DFD kernel blur correlation amount by using a lookup table indicating a relationship between a subject distance and a DFD kernel blur correlation amount (S210). In the lookup table, a DFD kernel blur correlation amount has a linear relationship with reciprocal of a subject distance (refer to Non-Patent Literature 5 for the lookup table calculation). If the lookup table does not include a corresponding DFD kernel blur correlation amount, the range image obtainment unit 400 may calculate a subject distance by interpolation. It is desirable that the lookup table is changed if the optical system is changed. Here, the range image obtainment unit 400 may prepare a plurality of lookup tables depending on diaphragm sizes or focal distances. Since the setting information of the optical system is known in image capturing, it is possible to predetermine a lookup table to be used.

Next, a method of calculating a blur correlation amount is described.

It is assumed that two images captured by different focal distances are referred to as an image G1 and an image G2. The range image obtainment unit 400 selects a current pixel for which a subject distance is to be measured, and sets pixel values in a rectangular region of M pixels x M pixels around the current pixel to be a DFD kernel in each of the image G1 and the image G2. The pixel value in the DFD kernel is expressed as g1(u, v) for the image G1 and as g2(u, v) for the image G2, where {u, v: i, 2, 3, ... M}. The coordinates of the current pixel are expressed as (cu, cv). The blur correlation amount G(u, v) of each pixel in an arbitral pixel position (u, v) in the DFD kernel is expressed by following Equation 3.

**[Math. 3]**

$$G(u,v) = \frac{C\{g1(u,v) - g2(u,v)\}}{\Delta g1(u,v) + \Delta g2(u,v)} \qquad \text{(Equation 3)}$$

where C is a constant that is experimentally determined, and A represents a quadratic differential (Laplacian) of a pixel value. As described above, a blur correlation amount for each pixel is determined by dividing (a) a difference of a pixel value of a predetermined pixel between the two images having different blurs by (b) an average value of quadratic differentials of the predetermined pixels in the two images. This blur correlation amount indicates a degree of a correlation of blurs on a pixel-by-pixel basis in an image.

By the above-described processing, the range image obtainment unit 400 obtains a range image indicating a distance from the camera to the subject from a captured image group. More specifically, the range image obtainment unit 400 obtains the first range image based on a blur correlation between a plurality of captured images which are included in the first captured image group and have different focal distances. In addition, the range image obtainment unit 400 obtains the second range image based on a blur correlation between a plurality of captured images which are included in the second captured image group temporally subsequent to the first captured image group and have different focal distances.

It should be noted that the range image obtainment unit 400 does not always need to perform the above-described processing to obtain the range images. For example, the range image obtainment unit 400 may merely receive range images that have been generated by the imaging unit 100 having a distance sensor.

<Range Motion Vector Calculation (S104)>

The following describes range motion vector calculation at Step S104 in more detail.

The range motion vector calculation unit 401 calculates a motion vector from the first range image and the second range image.

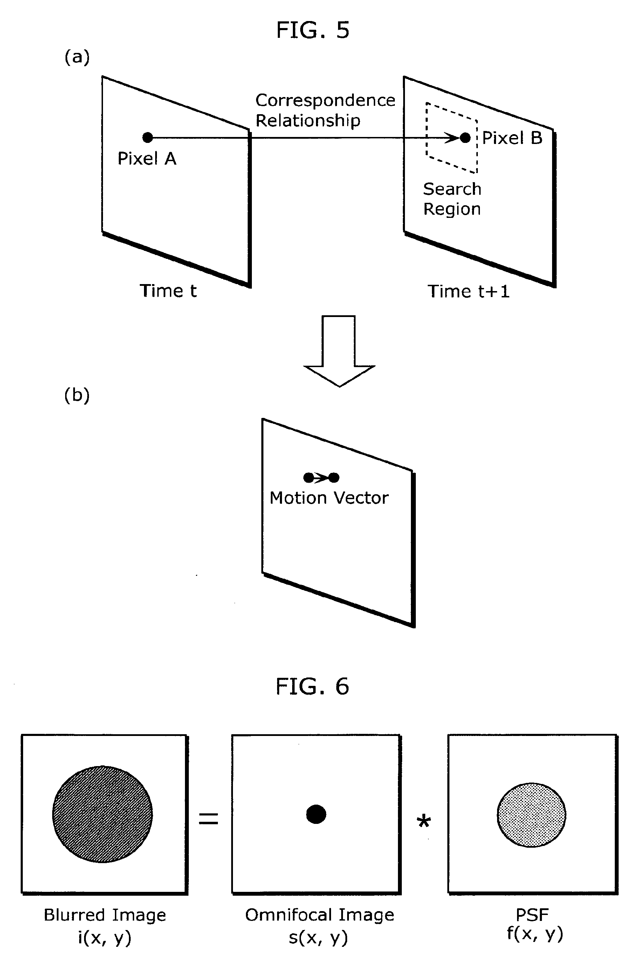

More specifically, the range motion vector calculation unit 401 first determines, for each pixel, a point in the first range image which corresponds to a point in the second range image (hereinafter, referred to as corresponding points in the first and second range image). Then, the range motion vector calculation unit 401 determines a vector connecting the corresponding points as a motion vector. The motion vector indicates a motion amount and a motion direction for the pixel in the first and second images. The motion vector is explained with reference to FIG. 5.

FIG. 5 (a) shows a range image at time t (the first range image) and a range image at time t+1 (the second range image). In FIG. 5 (a), a pixel A and a pixel B are determined as corresponding points, by searching the image at time t+1 for a pixel corresponding to the pixel A at time t.

Here, a method of searching for the corresponding points is explained. First, the range motion vector calculation unit 401 calculates a correlation value between (a) a region regarding the pixel A and (b) a region regarding a pixel including in a search region, in order to search the range image at time t+1 for a pixel corresponding to the pixel A. The correlation value is calculated by using, for example, a Sum of Absolute Difference (SAD) or a Sum of Squared Difference (SSD).

The search region is, for example, shown in FIG. 5 (a) as framed by a broken line in the range image at time t+1. It should be noted that a size of the search region may be set larger, if an object in the scene moves fast or if an interval between time t and time t+1 is long. On the other hand, the size of the search region may be set smaller, if the object in the scene moves slowly or if the interval between time t and time t+1 is short.

Equations 4 for calculating correlation values using SAD or SSD are presented below.

**[Math. 4]**

$$corsad = \sum_{u=0}^{N} \sum_{v=0}^{M} \left| I1(u + i1, v + j1) - I2(u + i2, v + j2) \right|$$

$$corssd = \sum_{u=0}^{N} \sum_{v=0}^{M} \left( I1(u + i1, v + j1) - I2(u + i2, v + j2) \right)^2$$

(Equations 4)

where I1(u, v) represents a pixel value of a pixel (u, v) in the image I1 at time t, and I2 (u, v) represents a pixel value of a pixel (u, v) in the image I2 at time t+1. The range motion vector calculation unit 401 calculates a correlation value between (a) a region of N pixels x M pixels around a pixel (i1, j1) in the image I1 and (b) a region of N pixels x M pixels around a pixel (i2, j2) in the image I2 according to Equation 4, so as to search the image I2 for a region similar to the region of N pixels x M pixels around the pixel (i1, j1) in the image I1. "corsad" represents a correlation value determined by SAD, and "corssd" represents a correlation value determined by SSD. Any of them can be used as a correlation value. Each of "corsad" and "corssd" has a value that decreases as a correlation increases.

The range motion vector calculation unit 401 calculates a correlation value by switching a pixel (i2, j2) in the search region. The range motion vector calculation unit 401 determines, as a pixel corresponding to the pixel A, a pixel (i2, j2) having a minimum correlation value from among the correlation values calculated as described above.

It should be noted that the method of calculating a correlation value according to SAD or SDD has been described above assuming that illumination fluctuation or contrast fluctuation is small between the two images. However, if illumination fluctuation or contrast fluctuation is large between the two images, it is desirable to calculate a correlation value by using, for example, a normalization cross-correlation method. It is thereby possible to search for more robust corresponding points.

The range motion vector calculation unit 401 can determine a motion vector for each pixel between the two range images, by performing the above-described processing for each of the pixels. Here, it is also possible to perform noise cancellation such as median filtering after the motion vector calculation.

It should also be noted that a motion vector may not be calculated for each pixel. For example, the range motion vector calculation unit 401 may calculate a range motion vector for each of blocks having a first size which are divided from an image. This case can reduce a load on the motion vector calculation in comparison to the case where a motion vector is calculated for each pixel.

<Texture Image Obtainment (S105)>

Next, the texture image obtainment at Step S105 is described in more detail.

According to the present embodiment, the texture image obtainment unit 408 first calculates the first texture image by using the first image group and the first range image. In addition, the texture image obtainment unit 408 calculates the second texture image by using the second image group and the second range image.

More specifically, the texture image obtainment unit 408 generates the first texture image, by reconstructing a single captured image included in the first captured image group based on blur information indicating a blur feature of the single captured image. In addition, the texture image obtainment unit 408 generates the second texture image, by reconstructing a single captured image included in the second captured image group based on blur information indicating a blur feature of the single captured image.

The following describes these processes in more detail with reference to the corresponding figures.

First, a method of calculating the texture images is explained. A texture image according to the present embodiment refers to an image from which a blur included in a captured image is removed by using a range image obtained by the depth-from-defocus method. Therefore, a texture image is an image (omnifocal image) in which all pixels come into the same focus.

First, a method of generating a texture image from a captured image is described. According to the present embodiment, the texture image obtainment unit 408 calculates blur information (a blur kernel) indicating a size of a blur in each pixel, based on a range image and a formula of the lens.

The texture image obtainment unit 408 performs an inverse convolution operation (restruction) on a blur kernel of each of pixels in a captured image, so as to generate a texture image (omnifocal image) in which all pixels come into the same focus.

In order to describe the above processing, how a blur occurs in an image is first explain. A luminance distribution of an omnifocal image without blur is expressed as s(x, y), and a blur function (Point Spread Function (PSF)) indicating a blur size is expressed as f(x, y). Here, for the sake of explanation simplicity, it is assumed that blurs having a blur function "f" homogenously occur on the entire image. The following Equation 5 is established if noise influence is ignored.

[Math. 5]

$$i(x, y) = s(x, y) * f(x, y)$$ (Equation 5)

where the symbol "*" represents a convolution operation. FIG. 6 shows an example where Equation 5 is expressed by images. If an omnifocal image is given as a point as shown in FIG. 6, it is convoluted by a circular blur function (defined in more detail later) to generate a blur image i(x, y). The blur function is referred to also as a blur kernel. A diameter of a circle of the blur function is called a kernel size.

The right side of Equation 5 is generally expressed by the following Equation 6.

**[Math. 6]**

$$s(x, y) * f(x, y) = \int_{-\infty}^{\infty}\int_{-\infty}^{\infty} s(j, k) f(x - j, y - k) \, dj \, dk$$ (Equation 6)

If an image consists of M pixels x N pixels, the above Equation 6 can be expressed by the following Equation 7.

**[Math. 7]**

$$s(x, y) * f(x, y) = \frac{1}{M \times N} \sum_{j=0}^{M-1} \sum_{k=0}^{N-1} s(j, k) f(x - j, y - k)$$ (Equation 7)

Generally, a Fourier transform for convoluting two functions is expressed by multiplication on Fourier transform of each function. Therefore, if Fourier transforms of i(x, y), x(x, y), and f(x, y) are expressed as I(u, v), S(u, v), and F(u, v), the following Equation 8 is derived from Equation 5. Here, (u, v) represents coordinates in a frequency region, and the coordinates indicate a spatial frequency in an x-direction and a spatial frequency in a y-direction, respectively, in an actual image.

[Math. 8]

$$I(u, v) = S(u, v) \bullet F(u, v)$$ (Equation 8)

where the symbol "." represents multiplication on function in a frequency region. Equation 8 is transformed to the following Equation 9.

[Math. 9]

$$S(u, v) = \frac{I(u, v)}{F(u, v)}$$ (Equation 9)

Equation 9 expresses that a function generated by dividing (a) a Fourier transform I(u, v) of an image i(x, y) captured by the camera by (b) a Fourier transform F(u, v) of f(x, y) that is a blur function PSF is equivalent to a Fourier transform S(u, v) of the omnifocal image s(x, y).

If f(x, y) that is a blur function PSF for each pixel is determined in the above manner, it is possible to determine the omnifocal image s(x, y) from the captured image i(x, y).

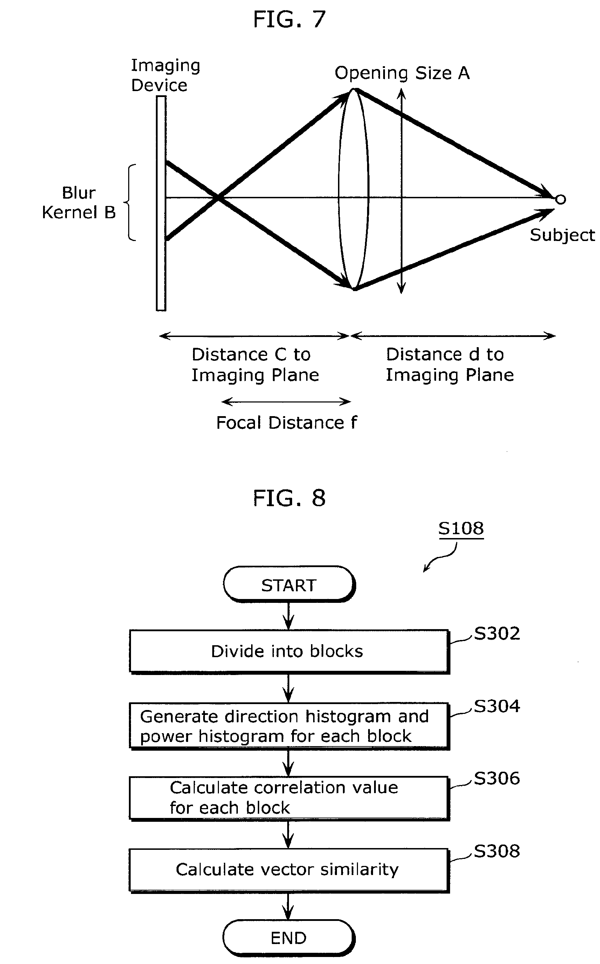

Then, an example of the method of calculating a blur function PSF for each pixel is explained. FIG. 7 shows a schematic diagram of the lens. It is assumed that a size of a blur kernel in capturing a subject having a distance "d" from the camera is "B", and a distance to the imaging plane is "C". A diaphragm diameter (opening size) "A" and a focal distance "f" are known from the setting conditions of the camera. Here, since a relationship between the opening size "A" and the focal distance "f" is similar to a relationship between the blur kernel "B" and a difference between the distance "C" to the imaging plane and the focal distance "f", the following Equation 10 is obtained.

**[Math. 6]**

$$A : B = f : C - f \qquad \text{(Equation 10)}$$

According to Equation 10, the blur kernel size "B" is expressed by the following Equation 11.

**[Math. 11]**

$$B = \frac{(C - f)A}{f} \qquad \text{(Equation 11)}$$

Here, the following Equation 12 is obtained based on the formula of the lens.

**[Math. 12]**

$$\frac{1}{C} + \frac{1}{d} = \frac{1}{f} \qquad \text{(Equation 12)}$$

Since the distance "d" from the camera to the subject and the focal distance "f" are known, Equation 11 can be transformed using Equation 12 to the following Equation 13.

**[Math. 13]**

$$B = \frac{\left( \dfrac{1}{\left( \dfrac{1}{d} + \dfrac{1}{f} \right)} - f \right) A}{f} \qquad \text{(Equation 13)}$$

The texture image obtainment unit 408 can calculate the blur kernel size "B" according to Equation 13. If the blur kernel size "B" is determined, the blur function f(x, y) is obtained. According to the present embodiment, the blur kernel is defined by a pillbox function. The pillbox function can be defined by the following Equation 14.

**[Math. 14]**

$$f(x, y) = \begin{cases} 1 : if \sqrt{x^2 + y^2} \leq \dfrac{B}{2} \\ 0 : otherwise \end{cases}$$

(Equation 14)

By the above-described method, the texture image obtainment unit 408 can obtain a blur function by determining a blur kernel for each pixel. Then, the texture image obtainment unit 408 performs the inverse convolution operation on the captured images by using the blur function according to Equation 10, thereby generating a texture image.

The texture image obtainment unit 408 calculates such a texture image from the first captured image group captured at time t, and also from the second captured image group captured at time t+1, so as to obtain the first texture image and the second texture image.

<Image Motion Vector Calculation (S106)>

The following describes image motion vector calculation at Step s106.

The image motion vector calculation unit 402 calculates a motion vector (image motion vector) from the first texture image and the second texture image.

It should be noted that the detailed processing of calculating a motion vector from the first texture image and the second texture image is the same as the range motion vector calculation, so that it is not described again.

<Vector Similarity Calculation (S108)>

The following describes the vector similarity calculation at Step S108 in more detail.

The vector similarity calculation unit 403 calculates a vector similarity between (a) a range motion vector calculated by the range motion vector calculation unit 401 and (b) an image motion vector calculated by the image motion vector calculation unit 402.

First, reasons why the vector similarity is to be calculated are explained. If the two motion vectors are not similar to each other, it means that the subject moves differently between the range images and the texture images. However, it is considered that if the same subject is shown in these two images, the movement of the subject should be similar between the range images and the texture images.

Therefore, if the two motion vectors are not similar to each other, there is a high possibility that interpolation parallax images generated from an interpolation range image and an interpolation texture image which are generated based on the two motion vectors do not correctly express a depth of the scene. As a result, when a 3D video for which frame interpolation has been performed using such interpolation parallax images is displayed by a 3D display apparatus, the user cannot correctly recognize the scene depth.

In particular, if corresponding points between range images are not correctly determined and therefore a range motion vector is not correctly calculated, a scene giving an unrealistic depth impression is displayed by the 3D display apparatus. In such 3D video, for example, a single subject which moves slowly in reality is perceived as abruptly moving forwards or backwards. Here, since the expected movement of the subject is significantly different from the movement of the subject perceived in the 3D video, there is a high possibility that the user feels sick watching the 3D video.

Therefore, in order to detect a failure of such motion vector calculation for range images, the present embodiment uses a similarity between a motion vector of range images and a motion vector of texture images. A range image and a texture image have, as images, different information, but they are characterized by having similar motion directions in an image region which result from a movement of an object included in a scene.

Therefore, certainty of the two motion vectors can be defined by a similarity between the two motion vectors. In other words, when the motion vector of the range images is not similar to the motion vector of the texture images, there is a high possibility that at least one of the motion vector of the range images and the motion vector of the texture images is not correctly calculated. Therefore, there is a high possibility that interpolation texture images or interpolation range images cannot be correctly generated by using the motion vector. Therefore, in such a case, by limiting the number of generated interpolation images, the 3D display apparatus displays 3D video with a low frame rate. This can prevent 3D sickness occurred by rapid changes of a scene depth.

A method of calculating a similarity between the motion vector of the range images and the motion vector of the texture images is described with reference to FIG. 8. FIG. 8 is a flowchart of the processing performed by the vector similarity calculation unit 403 according to the present embodiment of the present disclosure.

First, the vector similarity calculation unit 403 divides each of a range image and a texture image into a plurality of blocks (for example, a rectangular region having N pixels x M pixels, where each of N and M is an integer of 1 or more) (S302). A size of the block is larger than a block size based on which a motion vector is to be calculated. This means that, when a motion vector is calculated in units of a first block size, the vector similarity calculation unit 403 divides a target image into blocks each having a second block size larger than the first block size (S308).

Next, the vector similarity calculation unit 403 generates a direction histogram and a power histogram for each block (S304). The vector similarity calculation unit 403 calculates a similarity for each block using these histograms (S306). Finally, the vector similarity calculation unit 403 calculates an average value of the similarity determined for each block.

Here, a method of expressing motion vectors in a histogram is described. A motion vector is a vector on a two-dimensional plane. Therefore, a direction "dir" and a power "pow" of a motion vector can be calculated by the following Equations 15.

[Math. 15]

$$dir = \tan^{-1}\left(\frac{yvec}{xvec}\right)$$
$$pow = \sqrt{xvec^2 + yvec^2}$$

(Equations 15)

First, a method of generating a direction histogram of motion vectors is described. A value of a direction "dir" of a motion vector which is determined by Equation 15 ranges from 0 degrees to 359 degrees. Therefore, the vector similarity calculation unit 403 calculates, for each block, a direction "dir" of a motion vector of each pixel in a target block according to Equation 15. Then, the vector similarity calculation unit 403 calculates, for each angle ranging from 0 degrees to 359 degrees, a frequency of the calculated direction "dir" of the motion vector for each pixel, and generates the direction histogram of motion vectors for each block.

More specifically, the vector similarity calculation unit 403 applies Equation 16 to motion vectors of all respective pixels in the target block. Here, the motion vector is expressed as (xvec, yvec). If a motion vector of one pixel in the target block is selected, a direction of the selected motion vector is calculated by using a value of "xvec" and a value of "yvec".

Here, "direction_hist" is an array having 360 memory regions. All elements in this array have an initial value of 0. A function "f" in Equation 16 is a function for transforming the value from a radian to a frequency. In the function "f", a value after the decimal point is rounded off (or cut off). Assuming that the value ranging from 0 to 359 indicating a direction obtained by the function "f" is an argument of "direction_hist", a value of an element that corresponds in the array to the argument is incremented only by 1. Thereby, the direction histogram of motion vectors in the target block can be obtained.

[Math. 16]

$$direction\_hist[f(dir)] = direction\_hist[f(dir)] + 1$$

(Equation 16)

Next, a method of generating a power histogram of motion vectors is described. A maximum value of a motion vector power "pow" which is determined by Equation 15 is a maximum value of a length of the motion vector. In other words, a maximum value of a motion vector power "pow" of a motion vector is equivalent to a maximum value of a search range for corresponding points between an image at time t and an image at time t+1. Therefore, a maximum value of a motion vector power "pow" is equivalent to a maximum value of a distance between a pixel (i1, j1) of the image at time t and a pixel (i2, j2) of an image at time t+1 which is determined according to Equation 4.

This search range may be determined depending on a scene to be captured, or determined for each imaging apparatus. Furthermore, the search range may be set when the user captures images. If a maximum value of the search range is represented as "powmax", a possible range for a motion vector power is from 0 to "powmax".

The vector similarity calculation unit 403 generates a power histogram of motion vectors, by applying Equation 17 to motion vectors of all respective pixels in the target block. Here, "power_hist" is an array having (powmax + 1) memory regions. All elements in this array have an initial value of 0.

If a motion vector of one pixel in the target block is selected, a power of the selected motion vector is calculated according to Equation 15. The function "g" in Equation 17 is a function for rounding off (or cutting off) a value after the decimal point of the calculated motion vector power. Assuming that the value ranging from 0 to "powmax" indicating a power obtained by the function "g" is an argument of "powmax_hist", a value of an element that corresponds in the array to the argument is incremented only by 1. Thereby, the power histogram of the motion vectors in the target block can be determined.

[Math. 17]

$$power\_hist[g(pow)] = power\_hist[g(pow)] + 1$$

(Equation 17)

Next, the description is given for a method of calculating a similarity between blocks, based on a direction histogram and a power histogram of motion vectors which are generated in the above manner. For range images, a direction histogram is denoted as "d_direction_hist" and a power histogram is denoted as "d_power_hist". Likewise, for texture images, a direction histogram is denoted as "t_direction_hist" and a power histogram is denoted as "t_power_hist". The number of pixels (the number of motion vectors) in the target block is assumed as N pixels x M pixels. Here, the vector similarity calculation unit 403 calculates a histogram correlation value of the direction histograms, and a histogram correlation value of the power histograms, according to the following Equations 18.

[Math. 18]

$$dircor = \frac{1}{N \times M} \sum_{i=0}^{359} \min\left(d\_direction\_hist[i], t\_direction\_hist[i]\right)$$

$$powcor = \frac{1}{N \times M} \sum_{i=0}^{359} \min\left(d\_power\_hist[i], t\_power\_hist[i]\right)$$

(Equations 18)

According to Equations 18, "dircor" represents a correlation value of direction histograms, "powcor" represents a correlation value of power histograms, and a function "min" is a function for returning a smaller value of two arguments. As shapes of histograms are more similar to each other, a histogram correlation value ("dircor" and "powcor") approaches to 1. As shapes of histograms are more different from each other, the histogram correlation value approaches to 0.

The vector similarity calculation unit 403 calculates, for each block, a correlation value of histograms generated by the above method. Then, the vector similarity calculation unit 403 determines, as a similarity, an average value of the correlation values calculated for respective blocks. Since the histogram correlation value ranges from 0 to 1, the average value, namely, their average value, also ranges from 0 to 1. Therefore, the similarity indicates a rate indicating how much a motion vector of range images is similar to a motion vector of texture images.

As described above, the vector similarity calculation unit 403 generates, for each block, a direction histogram and a power histogram regarding range motion vectors. In addition, the vector similarity calculation unit 403 generates, for each block, a direction histogram and a power histogram regarding image motion vectors. Then, the vector similarity calculation unit 403 calculates a vector similarity, based on (a) a similarity between a direction histogram of range motion vectors and a direction histogram of image motion vectors and (b) a similarity between a power histogram of range motion vectors and a power histogram of image motion vectors.

It should be noted that the vector similarity calculation unit 403 does not necessarily use both a similarity of direction histograms and a similarity of power histograms in order to calculate a vector similarity. In other words, the vector similarity calculation unit 403 may calculate a vector similarity based on either a similarity of direction histograms or a similarity of power histograms. In this case, it is not necessary to generate the other similarity among the similarity of direction histograms and the similarity of power histograms.

It should also be noted that the vector similarity calculation unit 403 does not need to use such histograms to calculate a vector similarity. For example, the vector similarity calculation unit 403 calculates a vector similarity by comparing a direction to a power of an average vector.

<Interpolation Image Number Determination (S110)>

Next, the interpolation image number determination at Step S110 is described.

The interpolation image number determination unit 404 determines an upper limit of the number of interpolations (in other words, interpolation images) based on a vector similarity. As described above, if the motion vector is not correctly calculated and the number of interpolation parallax images is large, there is not only a problem of deteriorating image quality of 3D video, but also a problem of causing the user to feel 3D sickness, for example. Therefore, according to the present embodiment, a vector similarity is considered as an accuracy of motion vectors, and the interpolation upper limit is determined so that the number of generated interpolation parallax images is decreased when the vector similarity is lower. Therefore, even if motion vectors are not correctly calculated, it is possible to reduce harmful influence (for example, 3D sickness and the like) on a viewer of the frame-interpolated 3D video.

The following describes the method of determining the upper limit of interpolations based on a similarity of motion vectors. The interpolation image number determination unit 404 determines the upper limit "Num" of the number of interpolations corresponding to a vector similarity according to Equation 19.

**[Math. 19]**

$$Num = Sim * F \qquad \text{(Equation 19)}$$

where "F" represents a predetermined fixed value, and "Sim" represents a vector similarity. For example, if "F" is 30 and the vector similarity "Sim" is 0.5, the upper limit of the possible interpolation parallax images between time t and time t+1 is determined as 15.

Furthermore, the interpolation image number determination unit 404 may set, as the interpolation number, the number which is inputted by the user and is equal to or smaller than the interpolation upper limit. For example, if the upper limit is 15, the user may input a numeral number ranging from 0 to 15 as the interpolation number.

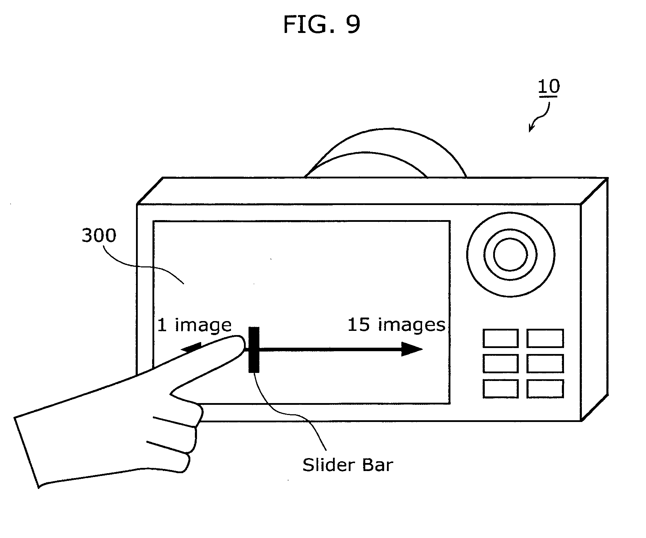

For example, as shown in FIG. 9, on a touch panel (the display unit 300), a slider bar is displayed to receive an input of a number ranging from 0 to 15. The user inputs a number equal to or smaller than the upper limit number by touching the touch panel to shifting the slider bar displayed on the touch panel.

This means that the use can set the interpolation number while viewing the display unit 300 on the rear side of the camera. With the above-described structure, the user can adjust the interpolation number, while checking 3D video for which frame interpolation has been performed by the interpolation parallax images generated by interpolation parallax image generation as described below.

Therefore, the user can intuitively input the interpolation number to obtain 3D video with less 3D sickness. In other words, it is possible to prevent the frame interpolation from discomforting the user. It is also possible to receive an input of the interpolation number not only by the illustrated touch panel but also by other input devices.

It should be noted that the interpolation image number determination unit 404 does not need to set the number inputted by the user as the interpolate number. For example, the interpolation image number determination unit 404 may determine the upper limit directly as the interpolation number.

It should be noted that Non-Patent Literature 6 does not show experimental results directly relating to 3D sickness caused by viewing 3D video, but shows the experimental results regarding sickness caused by viewing 2D images. Non-Patent Literature 6 describes that parameters of a camera are set not to cause inexactness of a size of left/right images, rotation, colors, and the like in camera capturing, in order to prevent that the inexactness causes video sickness or eyestrain.

Non-Patent Literature 6 also describes that some people can easily view images stereoscopically and the others cannot, and therefore fatigue viewing 3D video varies among individuals. Therefore, it is difficult to determine the number of interpolations never to cause 3D sickness by errors of interpolation parallax images. In order to address the difficulty, it is therefore desirable that the number of interpolation parallax images is set to a small value in standard, and the number of interpolations is adjusted by the user interface that designates a value as shown in FIG. 9.

<Interpolation Range Image Generation (S112), Interpolation Texture image Generation (S114)>

Next, the interpolation range image generation at Step S112, and the interpolation texture image generation at Step S114 are described in more detail.

The range image interpolation unit 405 generates, by using motion vectors, interpolation range images which are equal to or less than the interpolation upper limit determined by the interpolation image number determination unit 404. The image interpolation unit 406 generates, by using the motion vectors, interpolation texture images which are equal to or less than the interpolation upper limit determined by the interpolation image number determination unit 404.

Here, it is assumed that a motion vector regarding a pixel (u, v) in the image I1 at time t is expressed as (vx, vy). Under the assumption, a pixel which is included in the image I2 and corresponds to the pixel (u, v) in the image I1 is expressed as (u + vx, u + vy).

The following describes the method of interpolating between range images and between texture images by linear interpolation in the case where the interpolation number is "Num".

FIG. 9 is a diagram showing the method of interpolating between range images and between texture images according to the present embodiment of the present disclosure. In FIG. 9, interpolation range images to be interpolated between a range image at time t and a range image at time t+1 are generated, and interpolation texture images to be interpolated between a texture image at time t and a texture image at time t+1 are generated.

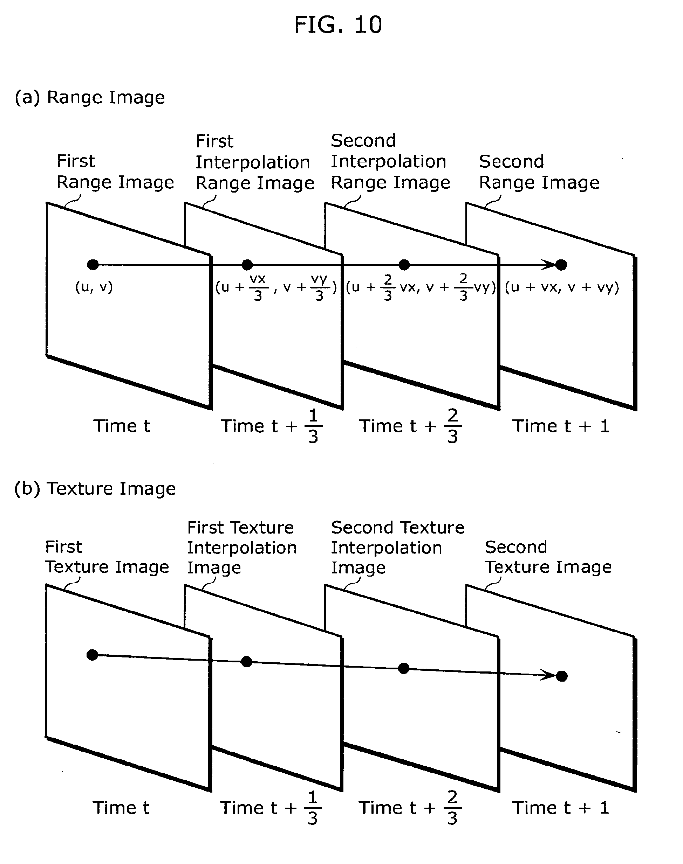

In the case of interpolation number "Num" = 2, as shown in FIG. 10 (a), an interval between time t and time t+1 is divided into 3 parts, and a first interpolation range image at time t+1/3 and a second interpolation range image at time t+2/3 are generated. A pixel included in the first interpolation range image (hereinafter, referred to as a "first interpolation pixel") and a pixel included in the second interpolation range image (hereinafter, referred to as a "second interpolation pixel") are dividing points between a pixel (u, v) in the first range image and a pixel (u + vx, v + vy) in the second range image. Therefore, the first interpolation pixel is expressed as (u + vx/3, v + vy/3), and the second interpolation pixel is expressed as (u + vx * 2/3, v + vy * 2/3).

Here, a pixel value of a pixel (u, v) in the first range image is expresses as Depth(u, v), and a pixel value of a pixel (u, v) in the second range image is expresses as Depth'(u, v). Here, a pixel value of the first interpolation pixel (u + vx/3, v + vy/3) is expressed as Depth(u, v) * 2/3 + Depth'(u + vx, v + vy)/3. Furthermore, a pixel value of the second interpolation pixel is expressed as Depth(u, v)/3 + Depth'(u + vx, v + vy) * 2/3.

Interpolation range images are generated by the above-described linear interpolation. It should be noted that interpolation texture images are generated also by the same method as described above, so that the generation of interpolation texture images is not explained below.

The above-described processing is generalized into Equations 20 and 21, were (u, v) represents coordinates of a pixel at time t, (vx, vy) represents a motion vector, "Num" represents the number of interpolations, "j" represents an integer ranging from 1 to "Num". Coordinates of a pixel in a j-th interpolation image is calculated according to the following Equation 20.

[Math. 20]

$$\left( u + \frac{Vx}{Num+1}\,j, v + \frac{Vy}{Num+1}\,j \right)$$

(Equation 20)

A calculation equation for calculating a pixel value of the j-th interpolation image is presented as the following Equation 21, where I(u, v) represents a pixel value of a pixel (u, v) at time t, and I'(u, v) represents a pixel value of a pixel (u, v) at time t+1.

[Math. 21]

$$I(u,v)\frac{Num+1-j}{Num+1} + I'(u+vx, v+vy)\frac{j}{Num+1}$$

(Equation 21)

The j-th interpolation image can be generated by the above-defined equations.

<Interpolation Parallax Image Generation (S116)>

Finally, the description is given for details of the interpolation parallax image generation at Step S116.

The interpolation parallax image generation unit 407 generates interpolation parallax images (here, parallax images mean a pair of a left-eye image and a right-eye image) from an interpolation range image and an interpolation texture image. The following describes a method of generating a left-eye interpolation image from an interpolation texture image and an interpolation range image.

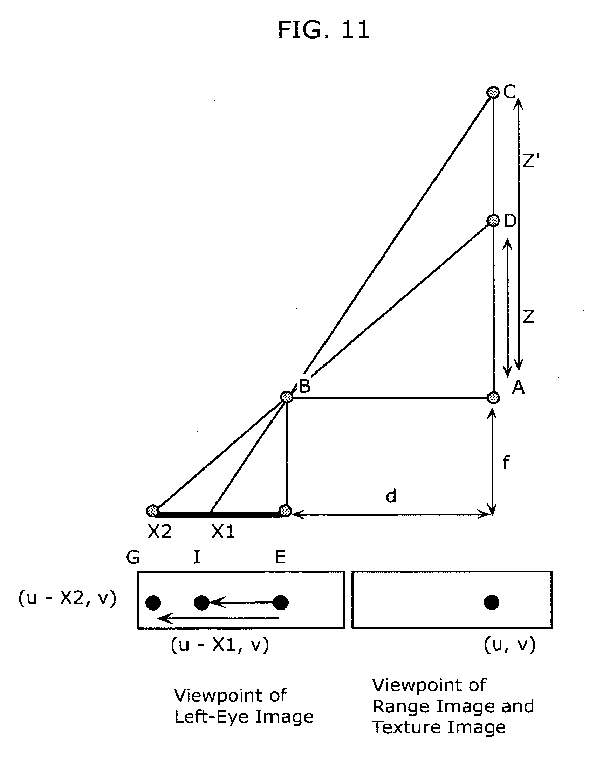

FIG. 11 is a diagram for explaining the method of generating interpolation parallax images according to the present embodiment of the present disclosure. More specifically, FIG. 11 shows a relationship between (a) a distance to a subject and (b) coordinates on an image, in the case where the subject is viewed from a viewpoint of an interpolation range image and an interpolation texture image and from a viewpoint of a left-eye image to be generated. Symbols in FIG 11 represent as follows.

A: direction measuring position
B: left parallax position
C, D: subject
E: optical axis of left parallax position
G, I: position of a left-eye camera to capture image of a subject C, D
f: focal distance of direction measuring position
d: distance between A and B
Z, Z': a distance to C, D
X1, X2: coordinates on captured image

If a pixel which is included in the left-eye interpolation image and corresponds to a pixel (u, v) in the interpolation texture image is determined, a pixel value of the pixel (u, v) is copied to the corresponding pixel in the left-eye interpolation image, thereby generating a left-eye image. In FIG. 11, the focal distance "f" and the distance Z or Z' from the camera to the subject are known. The distance "d" is a value which can be desirably predetermined in generating parallax images, so that the distance "d" is known. Here, since a triangle ABC and a triangle EIB are similar to each other, and a triangle ABD and a triangle EGB are similar to each other, the following Equations 22 are obtained.

[Math. 22]

$$f:Z'=X2:d, \quad f:Z=X1:d$$

$$\text{(Equations 22)}$$

Equations 22 are transformed to Equations 23.

[Math. 23]

$$X2=\frac{fd}{Z'}, \quad X1=\frac{fd}{Z}$$

$$\text{(Equations 23)}$$

Therefore, when a distance indicated by the interpolation range image is Z, a pixel (u, v) in the interpolation texture image corresponds to a pixel (u - X1, v) in the left-eye interpolation image. Therefore, a pixel value of the pixel (u, v) in the interpolation texture image is copied to the pixel (u - X1, v) in the left-eye interpolation image, so as to generate a left-eye interpolation image. Likewise, when a distance indicated by the interpolation range image is Z', the pixel value of the pixel (u, v) in the interpolation texture image is copied to a pixel (u - X2, v) in the left-eye interpolation image.

The interpolation parallax image generation unit 407 performs the above-described processing on every pixel included in the interpolation range image so as to generate a left-eye interpolation image. A right-eye interpolation image is generated by copying the pixel value to a position symmetrical to that in the left-eye interpolation image. In the previous example, a pixel which is included in the right-eye interpolation image and corresponds to the pixel (u - X1, v) in the left-eye interpolation image is a pixel (u + X1, v). As described above, the interpolation parallax image generation unit 407 generates a left-eye interpolation image and a right-eye interpolation image. It should be noted that the interpolation parallax image generation unit 407 may generate not only interpolation parallax images but also parallax images.

As described above, the 3D imaging apparatus according to the present embodiment generates interpolation parallax images after separately performing interpolation for 2D images and interpolation for range images when frame interpolation is performed on 3D video. Therefore, it is possible to suppress more interpolation errors in a depth direction in comparison to the case where interpolation parallax images are generated by separately performing interpolation for left-eye images and interpolation for right-eye images. As a result, the frame interpolation on 3D video can be performed with a high accuracy. In addition, a left-eye interpolation image and a right-eye interpolation image are generated by using the same interpolation range image and the same interpolation image. Therefore, the 3D video for which the frame interpolation has been performed hardly cause the user viewing the 3D video to feel uncomfortable due to the interpolation.

Furthermore, the 3D imaging apparatus according to the present embodiment can determine the upper limit of interpolations depending on a similarity between a range motion vector and an image motion vector. When the similarity between the range motion vector and the image motion vector is low, there is a high possibility that the range motion vector or the image motion vector is not correctly calculated. Therefore, in such a case, the interpolation upper limit is set to be low so as to prevent that interpolation parallax images deteriorates image quality of the 3D video.

Moreover, the 3D imaging apparatus according to the present embodiment can calculate a vector similarity based on at least one of a histogram of motion vector directions and a histogram of motion vector powers. It is thereby possible to improve a correlation between a possibility of incorrect calculation of motion vectors and a vector similarity. As a result, the interpolation upper limit can be determined appropriately.

Furthermore, the 3D imaging apparatus according to the present embodiment uses, as inputs, a plurality of captured images having respective different focal distances. Therefore, the 3D imaging apparatus can contribute to the decrease of an imaging apparatus size.

Although the 3D imaging apparatus according to an aspect of the present disclosure has been described with reference to the embodiments as above, the present disclosure is not limited to these embodiments. Those skilled in the art will be readily appreciate that various modifications of the embodiments are possible without materially departing from the novel teachings and advantages of the present disclosure. Accordingly, all such modifications are intended to be included within the scope of this disclosure.

For example, it has been described in the above embodiment that the 3D image interpolation unit performs each processing on, as inputs, a plurality of captured images having respective different focal distances, but it is not necessarily to always use such captured images. For example, it is also possible to receive, as inputs, 3D video including left-eye images and right-eye images. In this case, the range image obtainment unit may obtain a range image based on parallax between a left-eye image and a right-eye image.

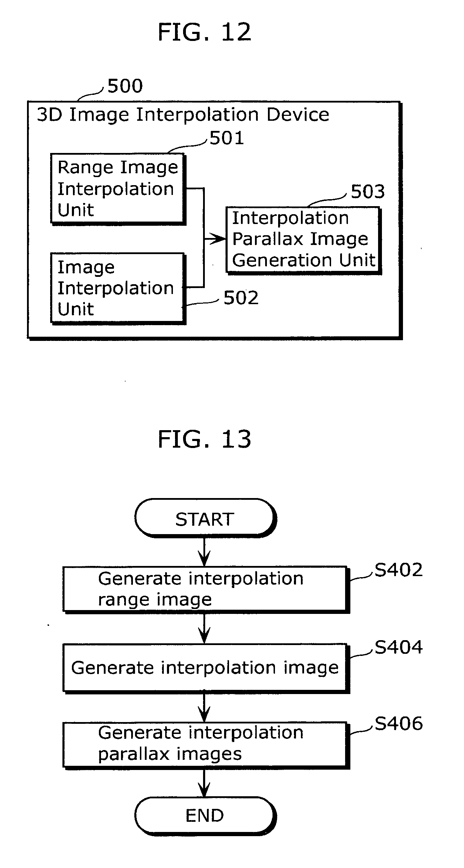

It should also be noted that it has been described in the above embodiment that the 3D image interpolation unit is included in the 3D imaging apparatus, but the 3D image interpolation unit may be implemented as a 3D image interpolation device independent from the 3D imaging apparatus. An example of such a 3D image interpolation device is described with reference to FIGS. 12 and 13.

FIG. 12 is a block diagram showing a functional structure of a 3D image interpolation device 500 according to another embodiment of the present disclosure. FIG. 13 is a flowchart of processing performed by the 3D image interpolation device 500 according to the other embodiment of the present disclosure. As shown in FIG. 12, the 3D image interpolation device 500 includes a range image interpolation unit 501, an image interpolation unit 502, and an interpolation parallax image generation unit 503.

As shown in FIG. 13, first, the range image interpolation unit 501 generates at least one interpolation range image to be interpolated between the first range image and the second range image (S402). Subsequently, the image interpolation unit 502 generates at least one interpolation image to be interpolated between the first image and the second image (S404). Finally, the interpolation parallax image generation unit 503 generates, based on the interpolation image, interpolation parallax images having parallax depending on a depth indicated by the interpolation range image (S406). As described above, the 3D image interpolation device 500 performs frame interpolation on 3D video.

(Other Variations)

The following variations of the embodiment are also included in the present disclosure.

(1) The above-described 3D image interpolation device may be, more specifically, a computer system including a microprocessor, a Read Only Memory (ROM), a Random Access Memory (RAM), a hard disk unit, a display unit, a keyboard, a mouse, and the like. The ROM or the hard disk unit holds a computer program. The microprocessor executes the computer program to cause the 3D image interpolation device to perform its functions. Here, the computer program consists of combinations of instruction codes for issuing instructions to the computer to execute predetermined functions.

(2) A part or all of the structural elements included in the above-described 3D image interpolation device may be implemented into a single Large Scale Integration (LSI). The system LSI is a super multi-function LSI that is a single chip into which a plurality of structural elements are integrated. More specifically, the system LSI is a computer system including a microprocessor, a ROM, a RAM, and the like. The RAM holds a computer program. The microprocessor is executed by the computer program to cause the system LSI to perform its functions.

(3) A part or all of the structural elements included in the 3D image interpolation device may be implemented into an Integrated Circuit (IC) card or a single module which is attachable to and removable from the device. The IC card or the module is a computer system including a microprocessor, a ROM, a RAM, and the like. The IC card or the module may include the above-described super multi-function LSI. The microprocessor executes the computer program to cause the IC card or the module to perform its functions. The IC card or the module may have tamper resistance.

(4) The present disclosure may be the above-described method. The present disclosure may be a computer program causing a computer to execute the method, or digital signals indicating the computer program.

It should also be noted that the present disclosure may be a computer-readable recording medium on which the computer program or the digital signals are recorded. Examples of the computer-readable recording medium are a flexible disk, a hard disk, a Compact Disc (CD)-ROM, a magnetooptic disk (MO), a Digital Versatile Disc (DVD), a DVD-ROM, a DVD-RAM, a BD (Blue-ray® Disc), and a semiconductor memory. The present disclosure may be digital signals recorded on the recording medium.

It should also be noted in the present disclosure that the computer program or the digital signals may be transmitted via an electric communication line, a wired or wireless communication line, a network represented by the Internet, data broadcasting, and the like.

It should also be noted that the present disclosure may be a computer system including a microprocessor operating according to the computer program and a memory storing the computer program.

It should also be noted that the program or the digital signals may be recorded onto the recording medium to be transferred, or may be transmitted via a network or the like, so that the program or the digital signals can be executed by a different independent computer system.

(5) The above-described embodiments and variations may be combined.

**[Industrial Applicability]**

The 3D image interpolation device and the 3D imaging apparatus according to the embodiments of the present disclosure can perform frame interpolation on 3D video with a high accuracy, and can be used as digital camcorders, display apparatuses, computer software, and the like.

**[Reference Signs List]**

| | |
|---|---|
| 10 | 3D imaging device |
| 100 | imaging unit |
| 101 | imaging element |
| 103 | optical lens |
| 104 | filter |
| 105 | control unit |
| 106 | device driving unit |
| 200 | signal processing unit |
| 201 | memory |
| 202 | 3D image interpolation unit |
| 203 | interface unit |
| 300 | display unit |
| 400 | range image obtainment unit |
| 401 | range motion vector calculation unit |
| 402 | image motion vector calculation unit |
| 403 | vector similarity calculation unit |
| 404 | interpolation image number determination unit |
| 405, 501 | range image interpolation unit |
| 406, 502 | image interpolation unit |
| 407, 503 | interpolation parallax image interpolation unit |
| 408 | texture image obtainment unit |
| 500 | 3D image interpolation device |

**Claims**

1. A three-dimensional (3D) image interpolation device that performs frame interpolation on 3D video, said 3D image interpolation device comprising:

a range image interpolation unit configured to generate at least one interpolation range image to be interpolated between a first range image and a second range image, the first range image indicating a depth of a first image included in the 3D video, and the second range image indicating a depth of a second image included in the 3D video;

an image interpolation unit configured to generate at least one interpolation image to be interpolated between the first image and the second image;

a range motion vector calculation unit configured to calculate, as a range motion vector, a motion vector between the first range image and the second range image;

an image motion vector calculation unit configured to calculate, as an image motion vector, a motion vector between the first image and the second image;

a vector similarity calculation unit configured to calculate a vector similarity that is a value indicating a degree of a similarity between the image motion vector and the range motion vector; and

an interpolation parallax image generation unit configured to generate, based on the at least one interpolation image interpolated according to the vector similarity, at least one pair of interpolation parallax images having parallax according to a depth indicated by the at least one interpolation range image.

2. The 3D image interpolation device according to Claim 1, further comprising
an interpolation image number determination unit configured to determine an upper limit of the number of interpolations, so that the number of the interpolations increases as the vector similarity calculated by said vector similarity calculation unit increases,
wherein said interpolation parallax image generation unit is configured to generate the at least one pair of interpolation parallax images which is equal to or less than the upper limit determined by said interpolation image number determination unit.

3. The 3D image interpolation device according to Claim 2,
wherein said range motion vector calculation unit is configured to calculate the range motion vector for each block having a first size,
said image motion vector calculation unit is configured to calculate the image motion vector for each block having the first size, and
said vector similarity calculation unit is configured to:

(i) generate at least one of a histogram of directions of range motion vectors including the range motion vector and a histogram of powers of the range motion vectors, for each block having a second size greater than the first size;
(ii) generate at least one of a histogram of directions of image motion vectors including the image motion vector and a histogram of powers of the image motion vectors, for each block having the second size; and
(iii) calculate the vector similarity based on at least one of (a) a similarity between the histogram of the directions of the range motion vectors and the histogram of the directions of the image motion vectors and (b) a similarity between the histogram of the powers of the range motion vectors and the histogram of the powers of the image motion vectors.

4. The 3D image interpolation device according to any one of Claims 2 and 3,
wherein said interpolation image number determination unit is configured to determine, as the number of the interpolations, a number which is inputted by a user and is equal to or less than the upper limit, and
said interpolation parallax image generation unit is configured to generate the at least one pair of interpolation parallax images which is equal to the number of the interpolations determined by said interpolation image number determination unit.

5. The 3D image interpolation device according to any one of Claims 1 to 4, further comprising
a range image obtainment unit configured to: (i) obtain the first range image based on a blur correlation between a plurality of captured images which are included in a first captured image group and have respective different focal distances; and (ii) obtain the second range image based on a blur correlation between a plurality of captured images which are included in a second captured image group and have respective different focal distances, the second captured image group being temporally subsequent to the first captured image group.

6. The 3D image interpolation device according to Claim 5, further comprising
a texture image obtainment unit configured to: (i) obtain, as the first image, a first texture image by reconstructing one captured image included in the first captured image group based on blur information indicating a feature of blur in the one captured image; and (ii) obtain, as the second image, a second texture image by reconstructing one captured image included in the second captured image group based on blur information indicating a feature of blur in the one captured image.

7. The 3D image interpolation device according to any one of Claims 1 to 6, wherein said 3D image interpolation device is implemented as an integrated circuit.

8. A 3D imaging apparatus, comprising:

an imaging unit; and
the 3D image interpolation device according to any one of Claims 1 to 7.

9. A three-dimensional (3D) image interpolation method of performing frame interpolation on 3D video, said 3D image interpolation method comprising:

generating at least one interpolation range image to be interpolated between a first range image and a second range image, the first range image indicating a depth of a first image included in the 3D video, and the second range image indicating a depth of a second image included in the 3D video;
generating at least one interpolation image to be interpolated between the first image and the second image;
calculating, as a range motion vector, a motion vector between the first range image and the second range image;
calculating, as an image motion vector, a motion vector between the first image and the second image;
calculating a vector similarity that is a value indicating a degree of a similarity between the image motion vector and the range motion vector; and
generating, based on the at least one interpolation image interpolated according to the vector similarity, at least one pair of interpolation parallax images having parallax according to a depth indicated by the at least one interpolation range image.

10. A program causing a computer to execute the 3D image interpolation method according to Claim 9.

**Patentansprüche**

1. Dreidimensionale (3D) Bildinterpolationsvorrichtung, die eine Rahmeninterpolation auf 3D-Video durchführt, wobei die 3D-Bildinterpolationsvorrichtung Folgendes umfasst:

eine Entfernungsbild-Interpolationseinheit, die konfiguriert ist, um mindestens ein Interpolationsentfernungsbild zu erzeugen, das zwischen einem ersten Entfernungsbild und einem zweiten Entfernungsbild zu interpolieren ist, wobei das erste Entfernungsbild eine Tiefe eines ersten Bildes angibt, das in dem 3D-Video enthalten ist, und das zweite Entfernungsbild eine Tiefe eines zweiten Bildes angibt, das in dem 3D-Video enthalten ist;
eine Bildinterpolationseinheit, die konfiguriert ist, um mindestens ein Interpolationsbild zu erzeugen, das zwischen dem ersten Bild und dem zweiten Bild zu interpolieren ist;
eine Entfernungsbewegungsvektor-Berechnungseinheit, die konfiguriert ist, um als einen Entfernungsbewegungsvektor einen Bewegungsvektor zwischen dem ersten Entfernungsbild und dem zweiten Entfernungsbild zu berechnen;
eine Bildbewegungsvektor-Berechnungseinheit, die konfiguriert ist, um als einen Bildbewegungsvektor einen Bewegungsvektor zwischen dem ersten Bild und dem zweiten Bild zu berechnen;
eine Vektorähnlichkeitsberechnungseinheit, die konfiguriert ist, um eine Vektorähnlichkeit zu berechnen, die ein Wert ist, der einen Grad einer Ähnlichkeit zwischen dem Bildbewegungsvektor und dem Entfernungsbewegungsvektor angibt; und
eine Interpolations-Parallaxe-Bilderzeugungseinheit, die konfiguriert ist, um auf der Grundlage von mindestens einem gemäß der Vektorähnlichkeit interpolierten Interpolationsbild mindestens ein Paar von Interpolations-Parallaxe-Bildern zu erzeugen, die eine Parallaxe gemäß einer Tiefe aufweisen, die durch das mindestens eine Interpolationsentfernungsbild angegeben ist.

2. 3D-Bildinterpolationsvorrichtung nach Anspruch 1, die ferner Folgendes umfasst:

eine Interpolationsbildanzahl-Bestimmungseinheit, die konfiguriert ist, um eine obere Grenze der Anzahl von Interpolationen zu bestimmen, derart, dass die Anzahl der Interpolationen zunimmt, wenn die durch die Vektorähnlichkeits-Berechnungseinheit berechnete Vektorähnlichkeit zunimmt,
wobei die Interpolations-Parallaxe-Bilderzeugungseinheit konfiguriert ist, um das mindestens eine Paar von Interpolations-Parallaxe-Bildern zu erzeugen, das gleich oder kleiner als die durch die Interpolationsbildanzahl-Bestimmungseinheit bestimmte obere Grenze ist.

**3.** 3D-Bildinterpolationsvorrichtung nach Anspruch 2,
wobei die Entfernungsbewegungsvektor-Berechnungseinheit konfiguriert ist, um den Entfernungsbewegungsvektor für jeden Block zu berechnen, der eine erste Größe aufweist,
wobei die Bildbewegungsvektor-Berechnungseinheit konfiguriert ist, um den Bildbewegungsvektor für jeden Block zu berechnen, der die erste Größe aufweist, und
die Vektorähnlichkeitsberechnungseinheit für Folgendes konfiguriert ist:

(i) Erzeugen von mindestens einem von einem Histogramm von Richtungen von Entfernungsbewegungsvektoren, die den Entfernungsbewegungsvektor umfassen, und einem Histogramm von Leistungen der Entfernungsbewegungsvektoren für jeden Block, der eine zweite Größe aufweist, die größer als die erste Größe ist;
(ii) Erzeugen von mindestens einem von einem Histogramm von Richtungen von Bildbewegungsvektoren, die den Bildbewegungsvektor umfassen, und einem Histogramm von Leistungen der Bildbewegungsvektoren für jeden Block, der die zweite Größe aufweist; und
(iii) Berechnen der Vektorähnlichkeit auf der Grundlage von mindestens einem von (a) einer Ähnlichkeit zwischen dem Histogramm der Richtungen der Entfernungsbewegungsvektoren und dem Histogramm der Richtungen der Bildbewegungsvektoren und (b) einer Ähnlichkeit zwischen dem Histogramm der Leistungen der Entfernungsbewegungsvektoren und dem Histogramm der Leistungen der Bildbewegungsvektoren.

**4.** 3D-Bildinterpolationsvorrichtung nach einem der Ansprüche 2 und 3,
wobei die Interpolationsbildanzahl-Bestimmungseinheit konfiguriert ist, um als die Anzahl der Interpolationen eine Anzahl zu bestimmen, die durch einen Benutzer eingegeben wird und gleich oder kleiner als die obere Grenze ist, und
die Interpolations-Parallaxe-Bilderzeugungseinheit konfiguriert ist, um mindestens eines von einem Paar von Interpolations-Parallaxe-Bildern zu erzeugen, das gleich der durch die Interpolationsbildanzahl-Bestimmungseinheit bestimmten Anzahl der Interpolationen ist.

**5.** 3D-Bildinterpolationsvorrichtung nach einem der Ansprüche 1 bis 4, die ferner Folgendes umfasst:

eine Entfernungsbild-Erhalteeinheit, die für Folgendes konfiguriert ist: (i) Erhalten des ersten Entfernungsbildes auf der Grundlage einer Unschärfekorrelation zwischen mehreren erfassten Bildern, die in einer ersten erfassten Bildgruppe enthalten sind und jeweils unterschiedliche Brennweiten aufweisen; und (ii) Erhalten des zweiten Entfernungsbildes auf der Grundlage einer Unschärfekorrelation zwischen mehreren erfassten Bildern, die in einer zweiten erfassten Bildgruppe enthalten sind und jeweils unterschiedliche Brennweiten aufweisen, wobei die zweite erfasste Bildgruppe zeitlich auf die erste erfasste Bildgruppe folgt.

**6.** 3D-Bildinterpolationsvorrichtung nach Anspruch 5, die ferner Folgendes umfasst:

eine Texturbild-Erhalteeinheit, die für Folgendes konfiguriert ist: (i) Erhalten eines ersten Texturbildes durch Rekonstruieren eines erfassten Bildes, das in der ersten erfassten Bildgruppe enthalten ist, auf der Grundlage von Unschärfeinformationen, die ein Unschärfemerkmal in dem einen erfassten Bild angeben, als das erste Bild; und (ii) Erhalten eines zweiten Texturbildes durch Rekonstruieren eines erfassten Bildes, das in der zweiten erfassten Bildgruppe enthalten ist, auf der Grundlage von Unschärfeinformationen, die ein Unschärfemerkmal in dem einen erfassten Bild angeben, als das zweite Bild.

**7.** 3D-Bildinterpolationsvorrichtung nach einem der Ansprüche 1 bis 6,
wobei die 3D-Bildinterpolationsvorrichtung als eine integrierte Schaltung ausgeführt ist.

**8.** 3D-Bildgebungsvorrichtung, die Folgendes umfasst:

eine Bildgebungseinheit; und
die 3D-Bildinterpolationsvorrichtung nach einem der Ansprüche 1 bis 7.

**9.** Dreidimensionales (3D) Bildinterpolationsverfahren zum Durchführen von Rahmeninterpolation auf 3D-Video, wobei das 3D-Bildinterpolationsverfahren Folgendes umfasst:

Erzeugen von mindestens einem Interpolationsentfernungsbild, das zwischen einem ersten Entfernungsbild und einem zweiten Entfernungsbild zu interpolieren ist, wobei das erste Entfernungsbild eine Tiefe eines ersten Bildes angibt, das in dem 3D-Video enthalten ist, und das zweite Entfernungsbild eine Tiefe eines zweiten Bildes angibt, das in dem 3D-Video enthalten ist;

Erzeugen von mindestens einem ersten Interpolationsbild, das zwischen dem ersten Bild und dem zweiten Bild zu interpolieren ist;

Berechnen eines Bewegungsvektors zwischen dem ersten Entfernungsbild und dem zweiten Entfernungsbild als ein Entfernungsbewegungsvektor;

Berechnen eines Bewegungsvektors zwischen dem ersten Bild und dem zweiten Bild als ein Bildbewegungsvektor;

Berechnen einer Vektorähnlichkeit, die ein Wert ist, der einen Grad einer Ähnlichkeit zwischen dem Bildbewegungsvektor und dem Entfernungsbewegungsvektor angibt; und

Erzeugen von mindestens einem Paar von Interpolations-Parallaxe-Bildern, die eine Parallaxe gemäß einer Tiefe aufweisen, die durch das mindestens eine Interpolationsentfernungsbild angegeben ist, auf der Grundlage von mindestens einem gemäß der Vektorähnlichkeit interpolierten Interpolationsbild.

**10.** Programm, das bewirkt, dass ein Rechner das 3D-Bildinterpolationsverfahren nach Anspruch 9 ausführt.

## Revendications

**1.** Dispositif d'interpolation d'image tridimensionnelle (3D) qui effectue une interpolation de trame sur une vidéo 3D, ledit dispositif d'interpolation d'image 3D comprenant :

une unité d'interpolation d'image télémétrique configurée pour générer au moins une image télémétrique d'interpolation devant être interpolée entre une première image télémétrique et une deuxième image télémétrique, la première image télémétrique indiquant une profondeur d'une première image incluse dans la vidéo 3D, et la deuxième image télémétrique indiquant une profondeur d'une deuxième image incluse dans la vidéo 3D ;

une unité d'interpolation d'image configurée pour générer au moins une image d'interpolation devant être interpolée entre la première image et la deuxième image ;

une unité de calcul de vecteur de mouvement de distance configurée pour calculer, en tant que vecteur de mouvement de distance, un vecteur de mouvement entre la première image télémétrique et la deuxième image télémétrique ;

une unité de calcul de vecteur de mouvement d'image configurée pour calculer, en tant que vecteur de mouvement d'image, un vecteur de mouvement entre la première image et la deuxième image ;

une unité de calcul de similitude de vecteurs configurée pour calculer une similitude de vecteurs qui est une valeur indiquant un degré d'une similitude entre le vecteur de mouvement d'image et le vecteur de mouvement de distance , et

une unité de génération d'image à parallaxe d'interpolation configurée pour générer, sur la base de l'au moins une image d'interpolation interpolée selon la similitude de vecteurs, au moins une paire d'images à parallaxe d'interpolation présentant une parallaxe selon une profondeur indiquée par l'au moins une image télémétrique d'interpolation.

**2.** Dispositif d'interpolation d'image 3D selon la revendication 1, comprenant en outre :

une unité de détermination de nombre d'images d'interpolation configurée pour déterminer une limite supérieure du nombre d'interpolations, de sorte que le nombre des interpolations augmente à mesure que la similitude de vecteurs calculée par ladite unité de calcul de similitude de vecteurs augmente,

dans lequel ladite unité de génération d'image à parallaxe d'interpolation est configurée pour générer l'au moins une paire d'images à parallaxe d'interpolation qui est inférieure ou égale à la limite supérieure déterminée par ladite unité de détermination de nombre d'images d'interpolation.

**3.** Dispositif d'interpolation d'image 3D selon la revendication 2,

dans lequel ladite unité de calcul de vecteur de mouvement de distance est configurée pour calculer le vecteur de mouvement de distance pour chaque bloc ayant une première taille,

ladite unité de calcul de vecteur de mouvement d'image est configurée pour calculer le vecteur de mouvement d'image pour chaque bloc ayant la première taille, et

ladite unité de calcul de similitude de vecteurs est configurée pour :

(i) générer au moins l'un d'un histogramme de directions de vecteurs de mouvement de distance comportant le vecteur de mouvement de distance et d'un histogramme de puissances des vecteurs de mouvement de distance, pour chaque bloc présentant une deuxième taille plus grande que la première taille ;

(ii) générer au moins l'un d'un histogramme de directions de vecteurs de mouvement d'image comportant le vecteur de mouvement d'image et d'un histogramme de puissances des vecteurs de mouvement d'image, pour chaque bloc présentant la deuxième taille ; et

(iii) calculer la similitude de vecteurs sur la base d'au moins l'une (a) d'une similitude entre l'histogramme des directions des vecteurs de mouvement de distance et l'histogramme des directions des vecteurs de mouvement d'image et (b) d'une similarité entre l'histogramme des puissances des vecteurs de mouvement de distance et l'histogramme des puissances des vecteurs de mouvement d'image.

4. Dispositif d'interpolation d'image 3D selon l'une quelconque des revendications 2 et 3,
dans lequel ladite unité de détermination de nombre d'images d'interpolation est configurée pour déterminer, en tant que nombre des interpolations, un nombre qui est saisi par un utilisateur et est inférieur ou égal à la limite supérieure, et
ladite unité de génération d'image à parallaxe d'interpolation est configurée pour générer l'au moins une paire d'images à parallaxe d'interpolation qui est égale au nombre des interpolations déterminées par ladite unité de détermination de nombre d'images d'interpolation.

5. Dispositif d'interpolation d'image 3D selon l'une quelconque des revendications 1 à 4, comprenant en outre
une unité d'obtention d'image télémétrique configurée pour : (i) obtenir la première image télémétrique sur la base d'une corrélation de flou entre une pluralité d'images capturées qui sont incluses dans un premier groupe d'images capturées et présentent différentes distances focales respectives ; et (ii) obtenir la deuxième image télémétrique sur la base d'une corrélation de flou entre une pluralité d'images capturées qui sont incluses dans un deuxième groupe d'images capturées et présentent différentes distances focales respectives, le deuxième groupe d'images capturées étant temporellement postérieur au premier groupe d'images capturées.

6. Dispositif d'interpolation d'image 3D selon la revendication 5, comprenant en outre
une unité d'obtention d'image de texture configurée pour : (i) obtenir, en tant que première image, une première image de texture par la reconstruction d'une image capturée incluse dans le premier groupe d'images capturées sur la base des informations de flou indiquant une caractéristique de flou dans l'image capturée ; et (ii) obtenir, en tant que deuxième image, une deuxième image de texture par la reconstruction d'une image capturée incluse dans le deuxième groupe d'images capturées sur la base des informations de flou indiquant une caractéristique de flou dans l'image capturée.

7. Dispositif d'interpolation d'image 3D selon l'une quelconque des revendications 1 à 6,
dans lequel ledit dispositif d'interpolation d'image 3D est employé en tant que circuit intégré.

8. Appareil d'imagerie 3D, comprenant :

une unité d'imagerie ; et
le dispositif d'interpolation d'image 3D selon l'une quelconque des revendications 1 à 7.

9. Procédé d'interpolation d'image tridimensionnelle (3D) qui consiste à effectuer une interpolation de trame sur une vidéo 3D, ledit procédé d'interpolation d'image 3D comprenant le fait :

de générer au moins une image télémétrique d'interpolation devant être interpolée entre une première image télémétrique et une deuxième image télémétrique, la première image télémétrique indiquant une profondeur d'une première image incluse dans la vidéo 3D, et la deuxième image télémétrique indiquant une profondeur d'une deuxième image incluse dans la vidéo 3D ;
de générer au moins une image d'interpolation devant être interpolée entre la première image et la deuxième image ;
de calculer, en tant que vecteur de mouvement de distance, un vecteur de mouvement entre la première image télémétrique et la deuxième image télémétrique ;
de calculer, en tant que vecteur de mouvement d'image, un vecteur de mouvement entre la première image et la deuxième image ;
de calculer une similitude de vecteurs qui est une valeur indiquant un degré d'une similitude entre le vecteur de mouvement d'image et le vecteur de mouvement de distance ; et

de générer, sur la base de l'au moins une image d'interpolation interpolée selon la similitude de vecteurs, au moins une paire d'images à parallaxe d'interpolation présentant une parallaxe selon une profondeur indiquée par l'au moins une image télémétrique d'interpolation.

10. Programme amenant un ordinateur à exécuter le procédé d'interpolation d'image 3D selon la revendication 9.

## FIG. 1

## FIG. 2

202

3D Image Interpolation Unit

400 Range Image Obtainment Unit

401 Range Motion Vector Calculation Unit

408 Texture Image Obtainment Unit

402 Image Motion Vector Calculation Unit

403 Vector Similarity Calculation Unit

404 Interpolation Image Number Determination Unit

405 Range Image Interpolation Unit

406 Image Interpolation Unit

407 Interpolation Parallax Image Generation Unit

# FIG. 3

START

Obtain range images — S102

Calculate motion vector of range images — S104

Obtain texture images — S105

Calculate motion vector of texture images — S106

Calculate vector similarity — S108

Determine upper limit of the number of interpolation parallax images — S110

Generate interpolation range images — S112

Generate interpolation texture images — S114

Generate a pair of interpolation parallax images — S116

END

# FIG. 4

S102

```
┌─────────────┐
│    START    │
└─────────────┘
       │
       ▼
┌────────────────────────────┐  S202
│  Obtain two images having  │
│  different focal distances │
└────────────────────────────┘
       │
       ▼
┌────────────────────────────┐  S204
│      Set DFD kernel        │
└────────────────────────────┘
       │
       ▼
┌────────────────────────────┐  S206
│ Calculate blur correlation amount │
└────────────────────────────┘
       │
       ▼
┌────────────────────────────┐  S208
│  Calculate weighted blur   │
│    correlation amount      │
└────────────────────────────┘
       │
       ▼
┌────────────────────────────┐  S210
│     Calculate distance     │
└────────────────────────────┘
       │
       ▼
┌─────────────┐
│     END     │
└─────────────┘
```

## FIG. 5

(a)

Correspondence
Relationship

Pixel A

Pixel B

Search
Region

Time t          Time t+1

(b)

Motion Vector

## FIG. 6

Blurred Image
i(x, y)

=

Omnifocal Image
s(x, y)

*

PSF
f(x, y)

## FIG. 7

Imaging Device

Opening Size A

Blur Kernel B

Subject

Distance C to Imaging Plane

Distance d to Imaging Plane

Focal Distance f

## FIG. 8

S108

START

Divide into blocks — S302

Generate direction histogram and power histogram for each block — S304

Calculate correlation value for each block — S306

Calculate vector similarity — S308

END

FIG. 9

10

300

1 image          15 images

Slider Bar

# FIG. 10

(a) Range Image

(b) Texture Image

# FIG. 11

(u - X2, v)

(u - X1, v)

(u, v)

Viewpoint of
Left-Eye Image

Viewpoint of
Range Image and
Texture Image

# FIG. 12

**500**

3D Image Interpolation Device

**501**
Range Image Interpolation Unit

**503**
Interpolation Parallax Image Generation Unit

**502**
Image Interpolation Unit

# FIG. 13

START

Generate interpolation range image — **S402**

Generate interpolation image — **S404**

Generate interpolation parallax images — **S406**

END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7262382 A
- JP 2010016743 A

**Non-patent literature cited in the description**

- A Multiple-baseline Stereo. *IEEE Trans. Pattern Analysis and Machine Intelligence,* 1993, vol. 15 (4), 353-363
- **L. ZHANG ; W. J. TAM.** Stereoscopic Image Generation Based on Depth Images for 3D TV. *IEEE Trans. On Broadcasting,* June 2005, vol. 51 (2
- **R. J. WOODHAM.** Photometric method for determining surface orientation from multiple images. *Optical Engineerings,* 1980, vol. 19 (I), 139-144
- **A. P. PENTLAND.** A new sense for depth of field. *IEEE Transaction on Pattern Analysis and Machine Intelligence,* 1987, vol. 2 (4), 523-531
- **M. SUBBARAO ; G. SURYA.** Depth from Defocus: A Spatial Domain Approach. *International Journal of Computer Vision,* 1994, vol. 13 (3), 271-294
- 3DC Safety Guidelines. 3D Consortium. 20 April 2010